(19) Europäisches Patentamt
European Patent Office
Office européen des brevets

(11) EP 0 892 805 B1

(12) EUROPEAN PATENT SPECIFICATION

(45) Date of publication and mention of the grant of the patent:
**02.07.2003 Bulletin 2003/27**

(21) Application number: **97915690.8**

(22) Date of filing: **10.04.1997**

(51) Int Cl.[7]: **C07D 501/18**, C07F 7/18

(86) International application number:
**PCT/JP97/01224**

(87) International publication number:
**WO 97/039002 (23.10.1997 Gazette 1997/45)**

(54) **PRODUCTION OF 7-AMINOCEPHALOSPORANIC ACID DERIVATIVE**

HERSTELLUNG VON AMINO CEPHALOSPORANSÄUREDERIVATEN

PRODUCTION D'ACIDE 7-AMINOCEPHALOSPORANIQUE

(84) Designated Contracting States:
**AT**

(30) Priority: **12.04.1996 JP 9137396**
**19.02.1997 JP 3527897**

(43) Date of publication of application:
**27.01.1999 Bulletin 1999/04**

(73) Proprietor: **Takeda Chemical Industries, Ltd.**
**Osaka-shi, Osaka 541-0045 (JP)**

(72) Inventors:
- **NISHIMURA, Shuichi**
**Yamaguchi 743 (JP)**
- **FUJIWARA, Yoshitaka**
**Osaka-shi Osaka 532 (JP)**
- **HIDAKA, Hiroaki**
**Kumage-cho Kumage-gun**
**Yamaguchi 745-06 (JP)**

(74) Representative:
**von Kreisler, Alek, Dipl.-Chem. et al**
**Patentanwälte**
**von Kreisler-Selting-Werner**
**Postfach 10 22 41**
**50462 Köln (DE)**

(56) References cited:
**EP-A- 0 581 220** **EP-A- 0 612 750**
**WO-A-86/03204** **WO-A-87/01116**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Technical Field

The present invention relates to a method of producing a 7-aminocephalosporanic acid derivative useful as a starting material for cephalosporin antibiotics [JP-A-149682/1987, JP-A-238589/1989, JP-A-14586/1991, JP-A-338332/1992 and so on (the term "JP-A-" as used herein means an "Japanese Patent Unexamined Publication")].

### Background art

Conventionally, 7-aminocephalosporanic acid (hereinafter referred to as 7-ACA) has been silylated by bis-trimethylsilylurea or bis-trimethylsilylacetamide as a silylating reagent. Not only these silylating reagents are expensive and necessitate high-temperature reaction conditions, but also, a decomposition reaction concurs, resulting in low yields. Another known method uses chlorotrimethylsilane (hereinafter refferred to as TMSC) as a silylating reagent but this method also necessitates drastic reaction conditions and, in addition, an organic base, such as triethylamine, must be used, resulting in low yields.

On the other hand, hexamethyldisilazane (hereinafter referred to as HMDS) is also commonly used as a silylating reagent but the use of a catalyst is essential because its reactivity is poor. Examples of such catalysts include TMSC, iodotrimethylsilane (hereinafter referred to as TMSI) (WO87/01116, JP-A-184161/1994) and saccharin (JP-A-45192/1982); however, even when these catalysts are used, the yields of the desired silyl derivative is not as high as expected. It is also known practice to use an organic oxo acid, trifluoroacetic acid, or the like, as a catalyst (W086/03204, JP-A-165765/1995 and JP-A-81479/1996) but none has ever attempted to use a sulfur-containing acid or an ammonium salt thereof or a Lewis acid.

There is a need for the development of a method enabling the production of a 7-aminocephalosporanic acid derivative useful as a starting material for cephalosporin antibiotics in higher yields with simple procedures.

### Disclosure of Invention

Through extensive investigation of various catalysts, the present inventors found a production method enabling efficient obtainment of the desired product using a certain acid as a catalyst.

Accordingly, the present invention relates to a method of producing a compound represented by the formula:

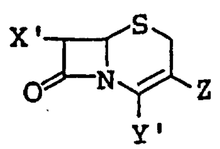

(I)

wherein X' represents an amino group that may be protected or trimethylsilylated; Y' represents a carboxyl group that may be protected or trimethylsilylated; Z represents ① hydrogen, ② a $C_{1-6}$ alkoxy group, ③ a $C_{1-6}$ alkyl group or ④ an $C_{2-6}$alkenyl group, each of ③ and ④ being unsubstituted or substituted by 1 to 4 substituents selected from the group consisting of (1) a $C_{1-10}$ alkanoyloxy group, (2) a heterocyclic group, (3) a $C_{1-6}$ alkoxy group, (4) a $C_{3-7}$ cycloalkyloxy group, (5) a $C_{6-10}$ aryloxy group, (6) a $C_{7-19}$ aralkyloxy group, (7) a heterocyclic-oxy group, (8) a mercapto group, (9) a $C_{1-6}$ alkylthio group, (10) a $C_{3-10}$ cycloalkylthio group, (11) a $C_{6-10}$ arylthio group, (12) a $C_{7-19}$ aralkylthio group, (13) a heterocyclic thio group, - (14) a mono-$C_{1-6}$ alkylamino group, (15) a di-$C_{1-6}$alkylamino group, (16) a tri-$C_{1-6}$alkylammonium group, (17) a $C_{3-10}$ cycloalkylamino group, (18) a $C_{6-10}$ arylamino group, (19) a $C_{7-19}$ aralkylamino group, (20) a heterocyclic amino group, (21) a cyclic amino group, (22) an azide group, (23) a nitro group, (24) a halogen atom, (25) a cyano group, (26) a $C_{1-10}$ alkoxy-carbonyl group, (27) a $C_{6-10}$ aryloxy-carbonyl group, (28) a $C_{7-19}$ aralkyloxy-carbonyl group, (29) a $C_{6-10}$ aryl-carbonyl group, (30) a $C_{1-6}$ alkanoyl group, (31) a $C_{3-5}$ alkenoyl group, (32) a $C_{6-10}$ aryl-carbonyloxy group, (33) a $C_{2-6}$ alkanoyloxy group, (34) a $C_{3-5}$ alkenoyloxy group, (35) a $C_{1-6}$ alkylsulfonyl group, (36) a $C_{6-10}$ arylsulfonyl group, (37) a carbamoyl group substituted by 1 or 2 substituents selected from the group consisting of a $C_{1-6}$ alkyl group, a $C_{6-10}$ aryl group, a $C_{1-6}$ alkanoyl group, a $C_{6-10}$ arylcarbonyl group and a $C_{1-6}$ alkoxy-phenyl group, (38) a cyclic aminocarbonyl group, (39) a thiocarbamoyl group substituted by 1 or 2 substituents selected from the group consisting of a $C_{1-6}$ alkyl group and a $C_{6-10}$ aryl group, (40) a carbamoyloxy group substituted by 1 or 2 substituents selected from the group consisting of a $C_{1-6}$ alkyl group, and a $C_{6-10}$ aryl group, (41) a, phthalimide group, (42) a $C_{1-6}$ an alkanoylamino group, (43) a $C_{6-10}$aryl-carbonylamino group, (44) a $C_{1-10}$ alkoxy

carboxamide group, (45) a $C_{6-10}$ aryl-carboxamide group and (46) a $C_{7-19}$ aralkyloxy-carboxamide group, and the heterocyclic group of a heterocyclic group, a heterocyclic-oxy group, a heterocyclic-thio group and a heterocyclic amino group being 5- to 8-membered ring containing 1 to 4 hetero atoms selected from the group consisting of a nitrogen atom (which may be oxidated), an oxygen atom and a sulfur atom, or a condensed ring thereof, at least one of X' and Y is trimethylsilylated, which comprises reacting a compound represented by the formula:

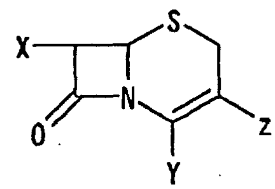

(II)

wherein X represents an amino group that may be protected; Y represents a carboxyl group that may be protected; at least one of X and Y is not protected, with hexamethyldisilazane in an inert solvent in the presence of (i) a sulfur-containing acid represented by the formula:

$$TS(O)_nH$$

wherein T is ① a hydrogen atom, ② a hydroxyl group, ③ a halogen atom ④ a $C_{1-6}$ alkyl group, ⑤ $C_{2-6}$ alkenyl group, ⑥ a $C_{6-10}$ aryl group or ⑦ a $C_{7-20}$ aralkyl group, the above ④ and ⑤ being unsubstituted or substituted by 1 or 2 halogen atoms, and the above ⑥ and ⑦ being unsubstituted or substituted by 1 or 2 substituents selected from the group consisting of a halogen atom,

and a $C_{1-4}$alkyl group, and n represents 1, 2 or 3, or (ii) an ammonium salt thereof or (iii) a Lewis acid selected from the group consisting of $BF_3 \cdot (C_2H_5)_2O$, $AlCl_3$, $ZnCl_2$, $FcCl_3$ and $TiCl_4$.

Best Mode for Carrying Out the Invention

The protecting group for the "amino group that may be protected" represented by X or X' is exemplified by known amino group-protecting groups in the field of β-lactam and peptides. Examples of such protecting groups include $C_{1-6}$ alkanoyl groups that may be substituted for, $C_{3-5}$ alkenoyl groups that may be substituted for, $C_{6-10}$ aryl-carbonyl groups that may be substituted for, heterocyclic carbonyl groups, $C_{1-10}$ alkylsulfonyl groups that may be substituted for, camphorsulfonyl groups, $C_{6-10}$ arylsulfonyl groups that may be substituted for, substitutional oxycarbonyl groups, carbamoyl groups that may be substituted for, thiocarbamoyl groups that may be substituted for, $C_{6-10}$ aryl-methyl groups that may be substituted for, di-$C_{6-10}$ aryl-methyl groups that may be substituted for, tri-$C_{6-10}$ aryl-methyl groups that may be substituted for, $C_{6-10}$ aryl-methylene groups that may be substituted for, $C_{6-10}$ arylthio groups that may be substituted for, 2-$C_{1-10}$ alkoxy-carbonyl-1-methyl-1-vinyl groups, and groups represented by the formula M'OCO- (M' represents an alkali metal).

Examples of "$C_{1-6}$ alkanoyl groups that may be substituted for" include $C_{1-6}$ alkanoyl groups that may be substituted for by 1 to 3 substituents selected from the group comprising halogens, oxo, $C_{1-6}$ alkoxys, $C_{1-6}$ alkanoyls, $C_{6-10}$ aryls, halogeno-$C_{6-10}$ aryls, $C_{6-10}$ aryloxys, halogeno-$C_{6-10}$ aryloxys and $C_{6-10}$ arylthios, specifically, for example, formyl, acetyl, propionyl, butyryl, valeryl, pivaloyl, succinyl, glutaryl, monochloroacetyl, dichloroacetyl, trichloroacetyl, monobromoacetyl, monofluoroacetyl, difluoroacetyl, trifluoroacetyl, monoiodoacetyl, acetoacetyl, 3-oxobutyryl, 4-chloro-3-oxobutyryl, phenylacetyl, p-chlorophenylacetyl, phenoxyacetyl and p-chlorophenoxyacetyl.

Examples of "$C_{3-5}$ alkenoyl groups that may be substituted for" include $C_{3-5}$ alkenoyl groups that may be substituted for by 1 to 3 substituents selected from the group comprising halogens and $C_{6-10}$ aryls, specifically acryloyl, crotonoyl, maleoyl, cinnamoyl, p-chlorocinnamoyl and β-phenylcinnamoyl.

Examples of "$C_{6-10}$ aryl-carbonyl groups that may be substituted for" include $C_{6-10}$ aryl-carbonyl groups that may be substituted for by 1 to 3 substituents selected from the group comprising halogens, nitro, hydroxy, $C_{1-6}$ alkyls and $C_{1-6}$ alkoxys, specifically benzoyl, naphthoyl, phthaloyl, p-toluoyl, p-tert-butylbenzoyl, p-hydroxybenzoyl, p-methoxybenzoyl, p-tert-butoxybenzoyl, p-chlorobenzoyl and p-nitrobenzoyl.

The "heterocyclic group" in "heterocyclic carbonyl groups" is a group resulting from removal of one hydrogen atom bound to a carbon atom of a heterocyclic ring, exemplified by a 5- to 8-membered ring containing one to several, preferably 1 to 4 hetero atoms such as nitrogen atoms (which may by oxidated), oxygen atoms and sulfur atoms, or a condensed ring thereof. Such heterocyclic groups include 2- or 3-pyrrolyl; 1-, 2-, 3-, 4- or 5-pyrazolyl; 2-, 4- or 5-imidazolyl; 1,2,3- or 1,2,4-triazolyl; 1H- or 2H-tetrazolyl; 2- or 3-furyl; 2- or 3-thienyl; 2-, 4- or 5-oxazolyl; 3-, 4- or 5-isoxazolyl; 1,2,3-oxadiazol-4-yl or 1,2,3-oxadiazol-5-yl; 1,2,4-oxadiazol-3-yl or 1,2,4-oxadiazol-5-yl; 1,2,5- or 1,3,4-oxadiazolyl; 2-, 4- or 5-thiazolyl; 3-, 4- or 5-isothiazolyl; 1,2,3-thiadiazol-4-yl or 1,2,3-thiadiazol-5-yl; 1,2,4-thiadiazol-3-yl or 1,2,4-thiadiazol-5-yl; 1,2,5-or 1,3,4-thiadiazolyl; 2- or 3-pyrolidinyl; 2-, 3- or 4-pyridyl; 2-, 3- or 4-pyridyl-N-oxide; 3- or 4-pyridazinyl; 3- or 4-pyridazinyl-N-oxide; 2-, 4- or 5-pyrimidinyl; 2-, 4- or 5-pyrimidinyl-N-oxide; pyrazinyl; 2-, 3- or 4-piperidinyl; piperazinyl; 3H-indol-2-yl or 3H-indol-3-yl; 2-, 3- or 4-pyranyl; 2-, 3- or 4-thiopyranyl; benzopyranyl; quinolyl; pyrido[2,3-d]pyrimidyl; 1,5-, 1,6-, 1,7-, 1,8-, 2,6- or 2,7-naphthylidyl; thieno[2,3-d]pyridyl; pyrimidopyridyl; pyrazinoquinolyl; and benzopyranyl.

Examples of "$C_{1-10}$ alkylsulfonyl groups that may be substituted for" include $C_{1-10}$ alkylsulfonyl groups that may be substituted for by 1 to 3 substituents selected from the group comprising halogens, $C_{6-10}$ aryls and $C_{6-10}$ aryloxys, specifically methanesulfonyl and ethanesulfonyl.

Examples of "$C_{6-10}$ arylsulfonyl groups that may be substituted for" include $C_{6-10}$ arylsulfonyl groups that may be substituted for by 1 to 3 substituents at any possible positions selected from the group comprising halogens, nitro, $C_{1-6}$ alkyls and $C_{1-6}$ alkoxys, specifically benzenesulfonyl, naphthalenesulfonyl, p-toluenesulfonyl, p-tert-butylbenzenesulfonyl, p-methoxybenzenesulfonyl, p-chlorobenzenesulfonyl and p-nitrobenzenesulfonyl.

Examples of "substitutional oxycarbonyl groups" include $C_{1-10}$ alkoxy-carbonyl groups, $C_{3-10}$ cycloalkyloxy-carbonyl groups, $C_{5-10}$ crosslinked ring hydrocarbon oxycarbonyl groups, $C_{2-10}$ alkenoyloxy-carbonyl groups, $C_{6-10}$ aryloxy-carbonyl groups and $C_{7-19}$ aralkyloxy-carbonyl groups, as well as those having 1 to 3 substituents at any possible positions selected from the group comprising $C_{1-6}$ alkoxy groups, $C_{1-6}$ alkanoyl groups, substitutional silyl groups (e.g., trimethylsilyl, tert-butyldimethylsilyl), $C_{1-6}$ alkylsulfonyl groups, halogens, cyano, $C_{1-6}$ alkyl groups and nitro. Specifically, such "substitutional oxycarbonyl" groups include methoxymethyloxycarbonyl, acetylmethyloxycarbonyl, 2-trimethylsilylethoxycarbonyl, 2-methanesulfonylethoxycarbonyl, 2,2,2-trichloroethoxycarbonyl, 2-cyanoethoxycarbonyl, allyloxycarbonyl, p-methylphenoxycarbonyl, p-methoxyphenoxycarbonyl, p-chlorophenoxycarbonyl, m-nitrophenoxycarbonyl, p-methylbenzyloxycarbonyl, p-methoxybenzyloxycarbonyl, p-chlorobenzyloxycarbonyl, p-nitrobenzyloxycarbonyl, o-nitrobenzyloxycarbonyl and 3,4-dimethoxy-6-nitrobenzyloxycarbonyl.

Examples of "carbamoyl groups that may be substituted for" include carbamoyl groups that may be substituted for by 1 or 2 substituents selected from the group comprising $C_{1-6}$ alkyl groups, $C_{6-10}$ aryl groups, $C_{1-6}$ alkanoyl groups, $C_{6-10}$ aryl-carbonyl group and $C_{1-6}$ alkoxy-phenyl groups, specifically N-methylcarbamoyl, N-ethylcarbamoyl, N,N-dimethylcarbamoyl, N,N-diethylcarbamoyl, N-phenylcarbamoyl, N-acetylcarbamoyl, N-benzoylcarbamoyl and N-(p-methoxyphenyl)carbamoyl.

Examples of "thiocarbamoyl groups that may be substituted for" include thiocarbamoyl groups that may be substituted for by 1 or 2 substituents selected from the group comprising $C_{1-6}$ alkyl groups and $C_{6-10}$ aryl groups, e.g., thiocarbamoyl, N-methylthiocarbamoyl and N-phenylthiocarbamoyl.

Examples of "$C_{6-10}$ aryl-methyl groups that may be substituted for" include $C_{6-10}$ aryl-methyl groups that may be substituted for by 1 to 3 substituents selected from the group comprising halogens, nitro, $C_{1-6}$ alkyls and $C_{1-6}$ alkoxys, specifically benzyl, naphthylmethyl, p-methylbenzyl, p-methoxybenzyl, p-chlorobenzyl and p-nitrobenzyl.

Examples of "di-$C_{6-10}$ aryl-methyl groups that may be substituted for" include di-$C_{6-10}$ aryl-methyl groups that may be substituted for by 1 to 3 substituents selected from the group comprising halogens, nitro, $C_{1-6}$ alkyls and $C_{1-6}$ alkoxys, specifically benzhydryl and di(p-tolyl)methyl.

Examples of "tri-$C_{6-10}$ aryl-methyl groups that may be substituted for" include tri-$C_{6-10}$ aryl-methyl groups that may be substituted for by 1 to 3 substituents selected from the group comprising halogens, nitro, $C_{1-6}$ alkyls and $C_{1-6}$ alkoxys, specifically trityl and tri(p-tolyl)methyl.

Examples of "$C_{6-10}$ aryl-methylene groups that may be substituted for" include $C_{6-10}$ aryl-methylene groups that may be substituted for by 1 to 3 substituents selected from the group comprising halogens, nitro, $C_{1-6}$ alkyls and $C_{1-6}$ alkoxys, specifically benzylidene, p-methylbenzylidene and p-chlorobenzylidene.

Examples of "$C_{6-10}$ arylthio groups that may be substituted for" include $C_{6-10}$ arylthio groups that may be substituted for by 1 to 3 substituents selected from the group comprising halogens, nitro, $C_{1-6}$ alkyls and $C_{1-6}$ alkoxys, specifically o-nitrophenylthio.

Examples of "2-$C_{1-10}$ alkoxy-carbonyl-l-methyl-l-vinyl groups" include 2-methoxycarbonyl-1-methyl-1-vinyl, 2-ethoxycarbonyl-1-methyl-1-vinyl, 2-tert-butoxycarbonyl-1-methyl-1-vinyl, 2-cyclohexyloxycarbonyl-1-methyl-1-vinyl and 2-norbornyloxycarbonyl-1-methyl-1-vinyl.

The "alkali metal" represented by M' in the "group represented by the formula M'OCO-" is preferably sodium, potassium, or the like, for example, with greater preference given to sodium etc.

X is preferably an amino group that may be protected by a $C_{1-6}$ alkanoyl group (e.g., phenylacetyl) that may be substituted for by (1) a formyl, (2) a $C_{1-10}$ alkoxy-carbonyl group (e.g., tert-butoxycarbonyl) or (3) a $C_{6-10}$ aryl group, more preferably a non-substitutional amino group.

As a protecting group for the "carboxyl group that may be protected" represented by Y or Y', a carboxyl group-protecting group in common use in the field of organic synthetic chemistry, especially in the field of β-lactam antibiotics such as cephalosporin, is used. Examples of such protecting groups include $C_{1-6}$ alkyl groups that may be substituted

for, $C_{2-6}$ alkenyl groups that may be substituted for, $C_{6-10}$ aryl groups that may be substituted for and $C_{7-20}$ aralkyl groups that may be substituted for.

Examples of "$C_{1-6}$ alkyl groups that may be substituted for" include methyl, ethyl, propyl, isopropyl, butyl, isobutyl, sec-butyl, tert-butyl, pentyl and hexyl.

Examples of "$C_{2-6}$ alkenyl groups that may be substituted for" include vinyl, allyl, isopropenyl, methallyl, 1,1-dimethylallyl, 2-butenyl and 3-butenyl.

Examples of "$C_{6-10}$ aryl groups that may be substituted for" include phenyl and naphthyl.

Examples of "$C_{7-20}$ aralkyl groups that may be substituted for" include benzyl, 1-phenylethyl, 2-phenylethyl, phenylpropyl, naphthylmethyl and benzhydryl.

Examples of substituents for the above-mentioned $C_{1-6}$ alkyl groups, $C_{2-6}$ alkenyl groups, $C_{6-10}$ aryl groups and $C_{7-20}$ aralkyl groups include hydroxy group, nitro group, halogens, $C_{1-6}$ alkoxy groups, $C_{1-10}$ alkanoyloxy groups, $C_{3-10}$ cycloalkyl-carbonyloxy groups, $C_{6-10}$ aryl-carbonyloxy groups, $C_{1-10}$ alkoxy-carbonyloxy groups, $C_{3-10}$ cycloalkyloxy-carbonyloxy groups, $C_{6-10}$ aryl-carbonyloxy groups, tri($C_{1-6}$ alkyl)silyl groups (e.g., trimethylsilyl, tert-butyldimethylsilyl) and $C_{1-6}$ alkylthio groups. The number of such substituents is preferably 1 to 3; the substituents may be identical or not.

Y is preferably a carboxyl group that may be protected by benzhydryl or methoxybenzyl, more preferably a non-substitutional carboxyl group.

In the present invention, at least one of X and Y in the starting material (II) must be in an unprotected state, i.e., both X and Y must not be concurrently protected.

In the present invention, when X is a protected amino group, X' represents a protected amino group; when X is an amino group, X' represents a trimethylsilylated amino group.

Also, when Y is a protected carboxyl group, Y' represents a protected carboxyl group; when Y is a carboxyl group, Y' represents a trimethylsilylated carboxyl group.

The alkoxy group represented by Z is exemplified by $C_{1-6}$ alkoxy groups such as methoxy, ethoxy, propoxy, isopropoxy, butoxy, isobutoxy, sec-butoxy, tert-butoxy, pentyloxy, isopentyloxy and hexyloxy.

The "alkyl group that may be substituted for" represented by Z is exemplified by $C_{1-6}$ alkyl groups such as methyl, ethyl, propyl, isopropyl, butyl, isobutyl, sec-butyl, tert-butyl, pentyl and hexyl.

The "alkenyl group that may be substituted for" represented by Z is exemplified by $C_{2-6}$ alkenyl group such as vinyl, allyl, 1-propenyl, isopropenyl, 2-methylallyl, 2-butenyl and 3-butenyl.

Examples of substituents for the "alkyl group that may be substituted for" or the "alkenyl group that may be substituted for" include $C_{1-10}$ alkanoyloxy groups, heterocyclic groups, hydroxy group, $C_{1-6}$ alkoxy groups, $C_{3-7}$ cycloalkyloxy groups, $C_{6-10}$ aryloxy groups, $C_{7-19}$ aralkyloxy groups, heterocyclic oxy groups, mercapto group, $C_{1-6}$ alkylthio groups, $C_{3-10}$ cycloalkylthio groups, $C_{6-10}$ arylthio groups, $C_{7-19}$ aralkylthio groups, heterocyclic thio groups, mono-$C_{1-6}$ alkylamino groups, di-$C_{1-6}$ alkylamino groups, tri-$C_{1-6}$ alkylammonium groups, $C_{3-10}$ cycloalkylamino groups, $C_{6-10}$ arylamino groups, $C_{7-19}$ aralkylamino groups, heterocyclic amino groups, cyclic amino groups, azide group, nitro group, halogen atoms, cyano group, carboxyl group, $C_{1-10}$ alkoxy-carbonyl groups, $C_{6-10}$ aryloxy-carbonyl groups, $C_{7-19}$ aralkyloxy-carbonyl groups, $C_{6-10}$ aryl-carbonyl groups, $C_{1-6}$ alkanoyl groups, $C_{3-5}$ alkenoyl groups, $C_{6-10}$ aryl-carbonyloxy groups, $C_{2-6}$ alkanoyloxy groups, $C_{3-5}$ alkenoyloxy groups, $C_{1-6}$ alkylsulfonyl groups, $C_{6-10}$ arylsulfonyl groups, carbamoyl groups that may be substituted for, thiocarbamoyl groups that may be substituted for, carbamoyloxy groups that may be substituted for, phthalimide groups, $C_{1-6}$ alkanoylamino groups, $C_{6-10}$ aryl-carbonylamino groups, $C_{1-10}$ alkoxy-carboxamide groups, $C_{6-10}$ aryloxy-carboxamide groups and $C_{7-19}$ aralkyloxy-carboxamide groups; 1 to 4 identical or different substituents at any possible positions may be present.

Here, the heterocyclic groups of the heterocyclic groups, heterocyclic oxy groups, heterocyclic thio groups and heterocyclic amino groups are exemplified by the same groups as those mentioned to exemplify the heterocyclic group in the above-described "heterocyclic carbonyl group."

Examples of "carbamoyl groups that may be substituted for" include carbamoyl groups that may be substituted for by 1 or 2 substituents selected from the group comprising $C_{1-6}$ alkyl groups, $C_{6-10}$ aryl groups, $C_{1-6}$ alkanoyl groups, $C_{6-10}$ arylcarbonyl groups and $C_{1-6}$ alkoxy-phenyl groups, and cyclic aminocarbonyl groups, specifically carbamoyl, N-methylcarbamoyl, N-ethylcarbamoyl, N,N-dimethylcarbamoyl, N,N-diethylcarbamoyl, N-phenylcarbamoyl, N-acetylcarbamoyl, N-benzoylcarbamoyl, N-(p-methoxyphenyl)carbamoyl, pyrrolidinocarbonyl, piperidinocarbonyl, piperazinocarbonyl and morpholinocarbonyl.

Examples of "thiocarbamoyl groups that may be substituted for" include thiocarbamoyl groups that may be substituted for by 1 or 2 substituents selected from the group comprising $C_{1-6}$ alkyl groups and $C_{6-10}$ aryl groups, specifically thiocarbamoyl, N-methylthiocarbamoyl and N-phenylthiocarbamoyl.

Examples of "carbamoyloxy groups that may be substituted for" include carbamoyloxy groups that may be substituted for by 1 or 2 substituents selected from the group comprising $C_{1-6}$ alkyl groups and $C_{6-10}$ aryl groups, specifically carbamoyloxy, N-methylcarbamoyloxy, N,N-dimethylcarbamoyloxy, N-ethylcarbamoyloxy and N-phenylcarbamoyloxy.

Z is preferably (i) an alkyl group substituted for by an alkanoyloxy group, a heterocyclic group, a heterocyclic thio group, or the like, or (ii) an alkenyl group substituted for by an tri$C_{1-6}$-alkylammonium group, an alkanoyloxy group, a heterocyclic group, a heterocyclic thio group.

Here, the alkanoyloxy group is preferably a $C_{1-6}$ alkanoyloxy group, for example, specifically formyloxy, acetyloxy, propionyloxy, butyryloxy, isobutyryloxy, valeryloxy, pivaloyloxy, or the like.

The heterocyclic group is preferably, for example, imidazo[1,2-b]pyridazinium-1-yl, 5-amino-1-hydroxyethylpyrazolinium-2-yl, or the like.

The heterocyclic thio group is preferably, for example, (N-methylpyridinium-4-yl)thio, (1-methylimidazo[1,2-b]pyridazinium-6-yl)thio, or the like.

The tri$C_{1-6}$-alkylammonium group is preferably, for example, N,N,N-carbamoylmethylethylmethylammoniumyl, or the like.

Z is more preferably a $C_{1-6}$ alkyl group substituted for by a $C_{1-6}$ alkanoyloxy, with greater preference given to acetyloxymethyl.

Preferable examples of compound (II) are compounds wherein X is an amino group, Y is a carboxyl group and Z is an alkyl group substituted for by an alkanoyloxy group.

More preferable examples of compound (II) are compounds wherein X is an amino group, Y is a carboxyl group and Z is a $C_{1-6}$ alkyl group substituted for by a $C_{1-6}$ alkanoyloxy group.

Still more preferable examples of compound (II) are compounds wherein X is an amino group, Y is a carboxyl group and Z is an acetoxymethyl group.

Examples of inert solvents include halogenated hydrocarbons such as dichloromethane, chloroform and 1,2-dichloroethane; aromatic hydrocarbons such as toluene and xylene; and saturated hydrocarbons such as cyclohexane. Preferable inert solvents are halogenated hydrocarbons, with greater preference given to 1,2-dichloroethane, dichloromethane, or the like. Because compound (I) as obtained by the production method of the present invention is easily decomposed in the presence of a trace amount of water, the reaction is normally carried out in the absence of water.

Regarding "a sulfur-containing acid or an ammonium salt thereof or a Lewis acid," the sulfur-containing acid is exemplified by a compound represented by the formula: $TS(O)_nH$ (T represents a hydrogen atom, a hydroxyl group, a halogen atom or a hydrocarbon group as defined above that may be substituted for; n represents 1, 2 or 3).

The halogen atom represented by T is exemplified by fluorine and chlorine.

The "hydrocarbon group that may be substituted for" represented by T is $C_{1-6}$ alkyl groups, $C_{2-6}$ alkenyl groups, $C_{6-10}$ aryl groups and $C_{7-20}$ aralkyl groups. These groups are the same as those mentioned above.

Examples of substituents for the "hydrocarbon group that may be substituted for" include halogens (e.g., fluorine, chlorine, bromine).

The number of these substituents is 1 or 2, and they may be identical or not. When the hydrocarbon group is a $C_{6-10}$ aryl group or a $C_{7-20}$ aralkyl group, it may have a $C_{1-4}$ alkyl group (e.g., methyl, ethyl) as a substituent.

Sulfur-containing acids include sulfuric acid, sulfuric anhydride, sulfonic acids, sulfinic acids and sulfenic acids, preferably an acid which has a sulfonic group, specifically sulfuric acid, methanesulfonic acid, p-toluenesulfonic acid, benzenesulfonic acid and chlorosulfonic acid.

Regarding "a sulfur-containing acid or an ammonium salt thereof or a Lewis acid," the Lewis acid may be any one, so long as it serves as an electron pair receptor, exemplified by $BF_3 \cdot (C_2H_5)_2O$, $AlCl_3$, $ZnCl_2$, $FeCl_3$ and $TiCl_4$.

The "sulfur-containing acid or ammonium salt thereof or Lewis acid" is preferably sulfuric acid, ammonium sulfate, methanesulfonic acid or $BF_3 \cdot (C_2H_5)O$, with greater preference given to sulfuric acid.

The amount of "sulfur-containing acid or ammonium salt thereof or Lewis acid" used is normally 0.005 to 0.5 equivalents,'preferably 0.02 to 0.1 equivalent relative to compound (II).

The amount of hexamethylsilazane used is normally 1 to 5 equivalents, preferably 2.0 to 3.5 equivalent relative to compound (II).

Although the reaction may be carried out at a reaction temperature between room temperature and the boiling point of the solvent, it is preferably carried out at 60 to 100°C.

Reaction time is normally about 0.1 to 20 hours, preferably about 0.5 to 10 hours.

Compound (I) as obtained by the present invention serves as a useful intermediate for the production of a large number of cephalosporin antibiotics; the desired cephalosporin antibiotic can be produced from compound (I) by, for example, the method described below.

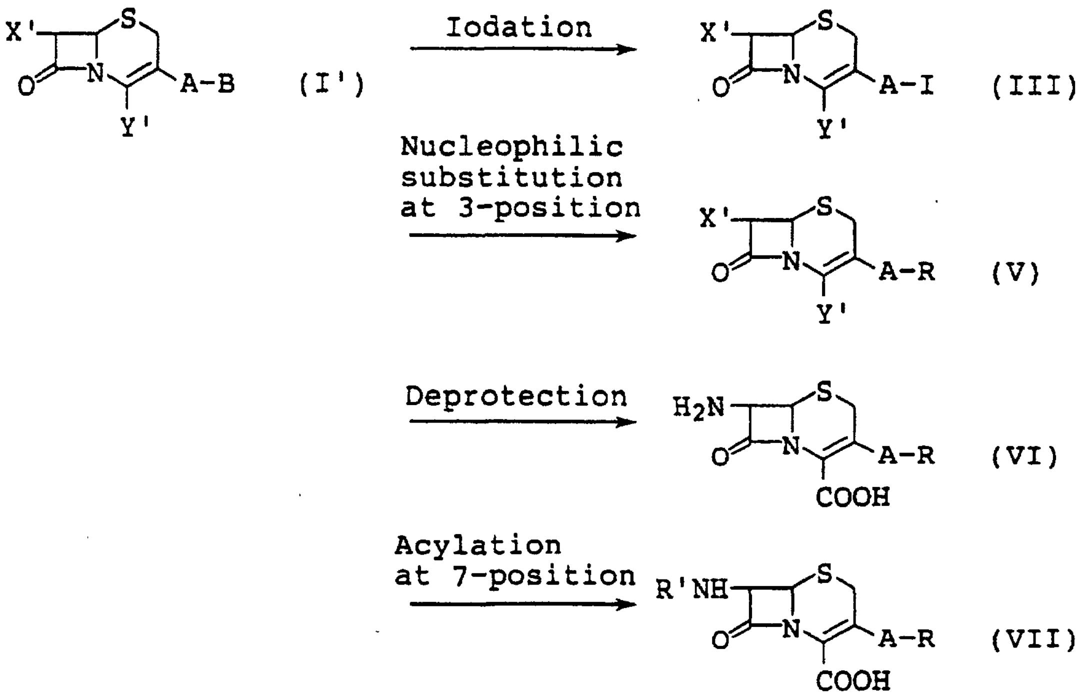


(I') (III) (V) (VI) (VII)

[In the above formulas, A represents an alkyl group; B represents a substituent; R represents a nucleophilic substituent; R' represents an acyl groups; the other symbols have the same definitions as those shown above.]

Here, the alkyl group represented by A has the same definition as that for the alkyl group defined for the "alkyl group that may be substituted for" represented by Z.

The substituent represented by B has the same definition as that for the substituent defined for the "alkyl group that may be substituted for" represented by Z, except that it does not represent a halogen atom. B is preferably a $C_{1-10}$ alkanoyloxy group, more preferably a $C_{1-6}$ alkanoyloxy.

The nucleophilic substituent represented by R is a nucleophilic substituent in common use in the field of cephalosporin antibiotics. Examples of such nucleophilic substituents include the imiazolium-1-yl group described in JP-A-149682/1987, which forms a condensed ring at the 2,3-or 3,4-position. A particularly preferable nucleophilic substituent is the imidazopyridazinium-1-yl group.

The acyl group represented by R' is an acyl group in common use in the field of cephalosporin antibiotics. Examples of such acyl groups include the group represented by the formula:

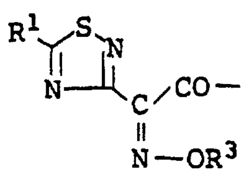

wherein $R_1$ represents an amino group that may be protected; $R_3$ represents a hydrogen atom or a hydrocarbon residue that may be substituted for, which is described in JP-A-149682/1987.

Here, the "amino group that may be protected" represented by $R_1$ is exemplified by the same amino groups as those mentioned to exemplify X above.

The "hydrocarbon residue that may be substituted for" represented by $R_3$ is exemplified by the same groups as the "$C_{1-6}$ alkyl groups that may be substituted for," "$C_{2-6}$ alkenyl groups that may be substituted for," "$C_{6-10}$ aryl groups that may be substituted for" and "$C_{7-20}$ aralkyl groups that may be substituted for" mentioned to exemplify the protecting group for Y and Y'.

In the method above, compound (I') is first iodated to yield compound (III).

Iodation can be achieved by a commonly known method; for example, it is achieved using an iodating reagent

such as an iodotrialkylsilane (e.g., iodotrimethylsilane). The amount of iodating reagent used is, for example, 1.7 to 2.0 equivalents relative to compound (I'). Reaction temperature is, for example, 5°C to room temperature (about 15°C), reaction time being, for example, about 1 to 3 hours.

Next, compound (III) is subjected to 3-position nucleophilic substitution reaction to yield compound (V).

3-position nucleophilic substitution reaction is achieved by a commonly known method using a nucleophilic reagent. When the nucleophilic reagent used is imidazopyridazine, for example, the amount of imidazopyridazine used is, for example, about 3 to 4 equivalents relative to compound (I'). Reaction temperature is, for example, 30 to 40°C, reaction time being, for example, about 2 to 5 hours.

Compound (V) is then subjected to deprotection reaction to yield compound (VI).

Deprotection reaction can be achieved by a commonly known method. When the protecting group used is a benzhydryl group, a p-methoxybenzyl group, a tert-butyl group, a tert-butoxycarbonyl group or a formyl group, for example, the protecting group is removed by treatment with formic acid, hydrochloric acid, trifluoroacetic acid, acetic acid, phenol or cresol. The trimethylsilyl group is removed by treatment with water or an alcohol (e.g., methanol, 2-propanol).

Compound (VI) thus obtained is subjected to 7-position acylation reaction to yield compound (VII).

7-position acylation can be achieved using a method in common use in the field of cephalosporin antibiotics, such methods including the method described in JP-A-149682/1987 and methods based thereon.

When desired, compounds (III), (V), (VI) and (VII) above may be isolated and purified by known means of separation and purification, e.g., concentration, concentration under reduced pressure, solvent extraction, crystallization, recrystallization, re-dissolution and chromatography.

The present invention is hereinafter described in more detail by means of the following working examples, comparative examples and reference example, which are not to be construed as limitative.

In the working examples and reference example below, the production of compound (I) and the production of the 3-iodomethyl derivative obtained by reaction of compound (I) and TMSI were confirmed by NMR analysis. Since compound (I) and the 3-iodomethyl derivative are both instable compounds, the yields of compound (I) was assessed by HPLC analysis of the compound obtained by reacting the 3-iodomethyl derivative with imidazopyridine, and subsequently subjecting the reaction product to deprotection reaction, i.e., 7-amino-3-(imidazopyridazinium)methylceph-3-em-4-carboxylate.

7-ACA, as a starting material in the following working examples and reference examples, is commercially available (for example, Cheil Jedang Corp., Antibioticos Corp., Biochemie Corp., or the like).

In the working examples and reference example, high performance liquid chromatography (HPLC) analysis was conducted under the following conditions:

HPLC conditions:

| | |
|---|---|
| Detector : | An ultraviolet absorption photometer, 254 nm (wave length) |
| Column : | Nucleosil 100-5$C_{18}$, 4.6 mm i.d. × 150 mm (produced by GL Science) |
| Mobile phase: | A mixture of 0.01 M sodium hexanesulfonate solution (pH 2.7) and methanol (95:5) |
| Flow rate : | 1.0 ml/min |

Example 1

Production of trimethylsilyl (6R,7R)-7-(trimethylsilyl)amino-3-acetoxymethylceph-3-em-4-carboxylate

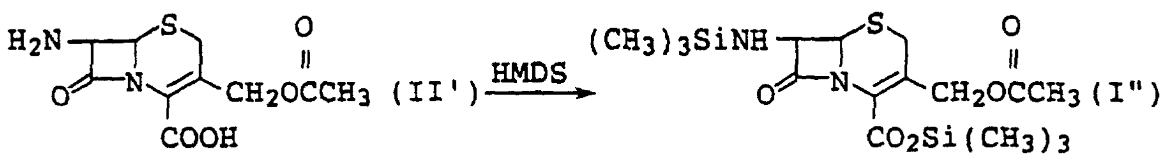


To a suspension of 28.2 g (100 mmol) of 7-ACA (Cheil Jedang Corp., content 96.7%) in 190 ml of 1,2-dichloroethane, 63 ml (300 mmol, 3.0 equivalents) of hexamethyldisilazane (HMDS) and 0.1 ml (2 mmol, 0.02 equivalents)

of sulfuric acid were added, followed by stirring at room temperature for 30 minutes, after which the mixture refluxed for 2 hours, to yield a yellowish transparent solution. An aliquot of this solution was evaporated to dryness under reduced pressure to distill off the solvent and excess HMDS to yield a solid residue. By $^1$HNMR spectral analysis of this residue, the production of the title compound was confirmed.
$^1$HNMR (DMSO-$d_6$): δ 0.06 (s, 9H, -N-Si($CH_3$)$_3$), 0.30 (s, 9H, -$CO_2$Si($CH_3$)$_3$), 2.03 (s, 3H, -$COCH_3$), 3.52, 3.56 (d, 2H, -$SCH_2$-), 4.72-5.04 (m, 4H, -$CH_2$OCO-, $C_6$-H, $C_7$-H)

Production of trimethylsilyl (6R,7R)-7-(trimethylsilyl)amino-3-iodomethylceph-3-em-4-carboxylate

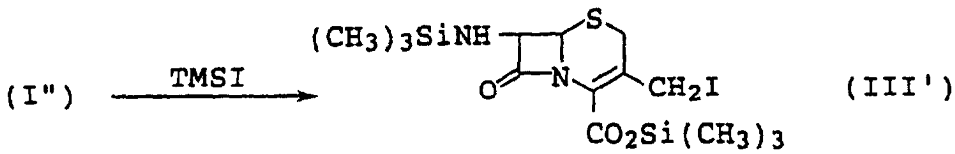

(I'') (III')

The yellowish transparent solution described above, i.e., the trimethylsilyl (6R,7R)-7-(trimethylsilyl)amino-3-acetoxymethylceph-3-em-4-carboxylate reaction mixture in 1,2-dichloroethane, was cooled to 5 to 10°C; a solution of 180 mmol (1.8 equivalents) of iodotrimethylsilane (TMSI) in 1,2-dichloroethane was added, followed by stirring at about 10°C for 3 hours, to yield a dark orange mixture. An aliquot of this mixture was evaporated to dryness under reduced pressure to distill off the solvent to yield a solid residue. By $^1$HNMR spectral analysis of this residue, the production of the title compound was confirmed.
$^1$HNMR (DMSO-$d_6$): δ 0.04 (s, 9H, -N-Si($CH_3$)$_3$), 0.31 (s, 9H, -$CO_2$Si($CH_3$)$_3$), 3.58, 3.74 (d, 2H, -$SCH_2$-), 4.39 (d, 2H, -$CH_2$I), 4.81 (1H, $C_7$-H), 4.94 (1H, $C_6$-H)

Production of trimethylsilyl (6R,7R)-7-(trimethylsilyl)amino-3-(imidazopyridazinium)methylceph-3-em-4-carboxylate iodide (hereinafter referred to as compound (V'))

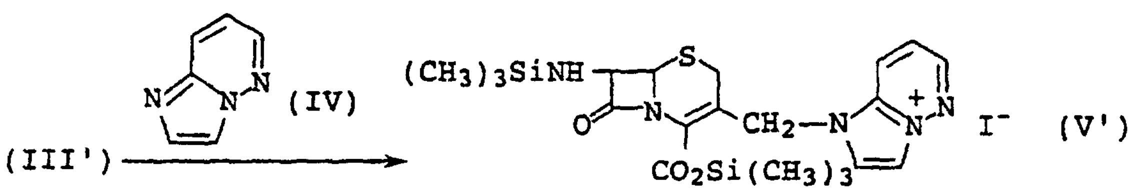
(III') (IV) (V')

To the dark orange mixture described above, i.e., the trimethylsilyl (6R,7R)-7-(trimethylsilyl)amino-3-iodomethylcef-3-em-4-carboxylate in 1,2-dichloroethane, 37.0 g (300 mmol, 3.0 equivalents) of dry imidazopyridazine (content 96.6%) was added and was stirred at 35°C for 4 hours, after which HPLC analysis demonstrated that the title compound was obtained at a yield of 79.6% (based on 7-ACA, the same applies below).

Example 2

Production of compound (V')

$$(II') \rightarrow \rightarrow \rightarrow (V') \qquad (V')$$

To a suspension of 28.1 g (100 mmol) of 7-ACA (content 97.0%) in 190 ml of 1,2-dichloroethane, 63 ml (300 mmol, 3.0 equivalents) of HMDS and 1.0 ml (8 mmol, 0.08 equivalents) of $BF_3 \cdot (C_2H_5)_2O$ were added, followed by

stirring at room temperature for 30 minutes, after which the mixture refluxed for 2 hours to yield a yellowish transparent solution. This solution was cooled to 5 to 10°C; a solution of 180 mmol (1.8 equivalents) of TMSI in 1,2-dichloroethane was added, followed by stirring at about 10°C for 3 hours, to yield a dark orange mixture. To this mixture, 37.0 g (300 mmol, 3.0 equivalents) of dry imidazopyridazine (content 96.6%) was added and stirred at 35°C for 4 hours, after which HPLC analysis demonstrated that compound (V') was obtained at a yield of 73.5%.

Example 3

Production of compound (V')

To a suspension of 2.81 g (10.0 mmol) of 7-ACA (content 97.0%) in 19 ml of 1,2-dichloroethane, 6.3 ml (30 mmol, 3.0 equivalents) of HMDS and 27 mg (0.2 mmol, 0.02 equivalents) of $AlCl_3$ (anhydrous) were added, followed by stirring at room temperature for 30 minutes, after which the mixture refluxed for 2 hours. The resulting solution was cooled to 5 to 10°C; a solution of 18 mmol (1.8 equivalents) of TMSI in 1,2-dichloroethane was added, followed by stirring at about 10°C for 3 hours. To this mixture, 3.70 g (30 mmol, 3.0 equivalents) of dry imidazopyridazine (content 96.6%) was added, followed by stirring at 35°C for 4 hours, after which HPLC analysis demonstrated that compound (V') was obtained at a yield of 68.0%.

Example 4

Production of compound (V')

To a suspension of 5.63 g (20.0 mmol) of 7-ACA (content 96.7%) in 38 ml of 1,2-dichloroethane, 12.6 ml (60 mmol, 3.0 equivalents) of HMDS and 53 mg (0.4 mmol, 0.02 equivalents) of $(NH_4)_2SO_4$ were added, followed by stirring at room temperature for 30 minutes, after which the mixture refluxed for 2 hours. The resulting solution was cooled to 5 to 10°C; a solution of 36 mmol (1.8 equivalents) of TMSI in 1,2-dichloroethane was added, followed by stirring at about 10°C for 3 hours, to yield a suspension. To this mixture, 7.40 g (60 mmol, 3.0 equivalents) of dry imidazopyridazine (content 96.6%) was added followed by stirring at 35°C for 4 hours, after which HPLC analysis demonstrated that compound (V') was obtained at a yield of 71.9%.

Example 5

Production of compound (V')

To a suspension of 5.63 g (20.0 mmol) of 7-ACA (content 96.7%) in 38 ml of 1,2-dichloroethane, 12.6 ml (60 mmol, 3.0 equivalents) of HMDS and 0.03 ml (0.46 mmol, 0.023 equivalents) of methanesulfonic acid were added, followed by stirring at room temperature for 30 minutes, after which the mixture refluxed for 2 hours. The resulting solution was cooled to 5 to 10°C; a solution of 36 mmol (1.8 equivalents) of TMSI in 1,2-dichloroethane was added, followed by stirring at about 10°C for 3 hours. To this mixture, 7.40 g (60 mmol, 3.0 equivalents) of dry imidazopyridazine (content 96.6%) was added, followed by was stirring at 35°C for 4 hours, after which HPLC analysis demonstrated that compound (V') was obtained at a yield of 73.3%.

Example 6

Production of compound (V')

To a suspension of 28.2 g (100 mmol) of 7-ACA (content 96.7%) in 190 ml of dichloromethane, 63 ml (300 mmol, 3.0 equivalents) of HMDS and 0.1 ml (2 mmol, 0.02 equivalents) of sulfuric acid were added, then the mixture refluxed for 4 hours. The resulting solution was cooled to 5 to 10°C; a solution of 180 mmol (1.8 equivalents) of TMSI in dichloromethane was added, followed by stirring at about 10°C for 3 hours. To this mixture, a solution of 41.7 g (net weight 350 mmol, 3.5 equivalents) of imidazopyridazine in 27ml of dichloromethane was added, followed by stirring at 35°C for 4 hours, after which HPLC analysis demonstrated that compound (V') was obtained at a yield of 80.4%.

Example 7

Production of 1-[[(6R,7R)-7-amino-2-carboxy-8-oxo-5-thio-1-azabicyclo[4.2.0]oct-2-en-3-yl]methyl]imidazo[1,2-b] pyridazinium hydroxide·inner salt monohydroiodide(7-ACP.HI)

To the solution of compound (V') produced according to the above-mentioned method, 490 ml of dichloromethane was added, followed by stirring and was cooled to below 10°C; with keeping the temperature below 10°C, 40.4 ml (2 equivalents) of methanol was added to the solution, followed by stirring for 15 minutes and 44.9 g of 57% hydroiodide (2 equivalents) was added dropwise over a period of ca. 30 minutes at room temperature. This solution was cooled to below 5°C, followed by stirring for 1 hour, after which the precipitated crystals were collected by filtration, washed with 110 ml of cold methanol, 220 ml of cold methamol/water(1/1) and then 110 ml of cold methanol, and dried under reduced pressure to yield 48.7 g of 7-ACP·HI (content: 47.3%, net weight: 23.0 g, yield based on 7-ACA: 69.5%).

Comparative Example 1

Production of compound (V')

To a suspension of 2.85 g (10.0 mmol) of 7-ACA (content 95.7%) in 19 ml of 1,2-dichloroethane, 6.3 ml (30 mmol, 3.0 equivalents) of HMDS was added, followed by stirring at room temperature for 30 minutes, after which the mixture refluxed for 2 hours. The resulting solution was cooled to 5 to 10°C; a solution of 18 mmol (1.8 equivalents) of TMSI in 1,2-dichloroethane was added, followed by stirring at about 10°C for 3 hours. To this mixture, 3.70 g (30 mmol, 3.0 equivalents) of dry imidazopyridazine (content 96.6%) was added, followed by stirring at 35°C for 4 hours, after which HPLC analysis demonstrated that compound (V') was obtained at a yield of 49.5%.

Comparative Example 2

Production of compound (V')

To a suspension of 34.0 g (120 mmol) of 7-ACA (content 96.1%) in 230 ml of 1,2-dichloroethane, 75 ml (360 mmol, 3.0 equivalents) of HMDS and 450 mg (2.5 mmol, 0.02 equivalents) of saccharin were added, followed by stirring at room temperature for 30 minutes, after which the mixture refluxed for 2 hours. The resulting solution was cooled to 5 to 10°C; a solution of 216 mmol (1.8 equivalents) of TMSI in 1,2-dichloroethane was added, followed by stirring at about 10°C for 3 hours. To this mixture, 44.4 g (360 mmol, 3.0 equivalents) of dry imidazopyridazine (content 96.6%) was added, followed by stirring at 35°C for 4 hours, after which HPLC analysis demonstrated that compound (V') was obtained at a yield of 64.8%.

Reference Example 1

Production of 1-[[(6R,7R)-7-amino-2-carboxy-8-oxo-5-thia-1-azabicyclo[4.2.0]oct-2-en-3-yl]methyl]imidazo[1,2-b] pyridazinium hydroxide, inner salt (7-ACP) dihydrochloride

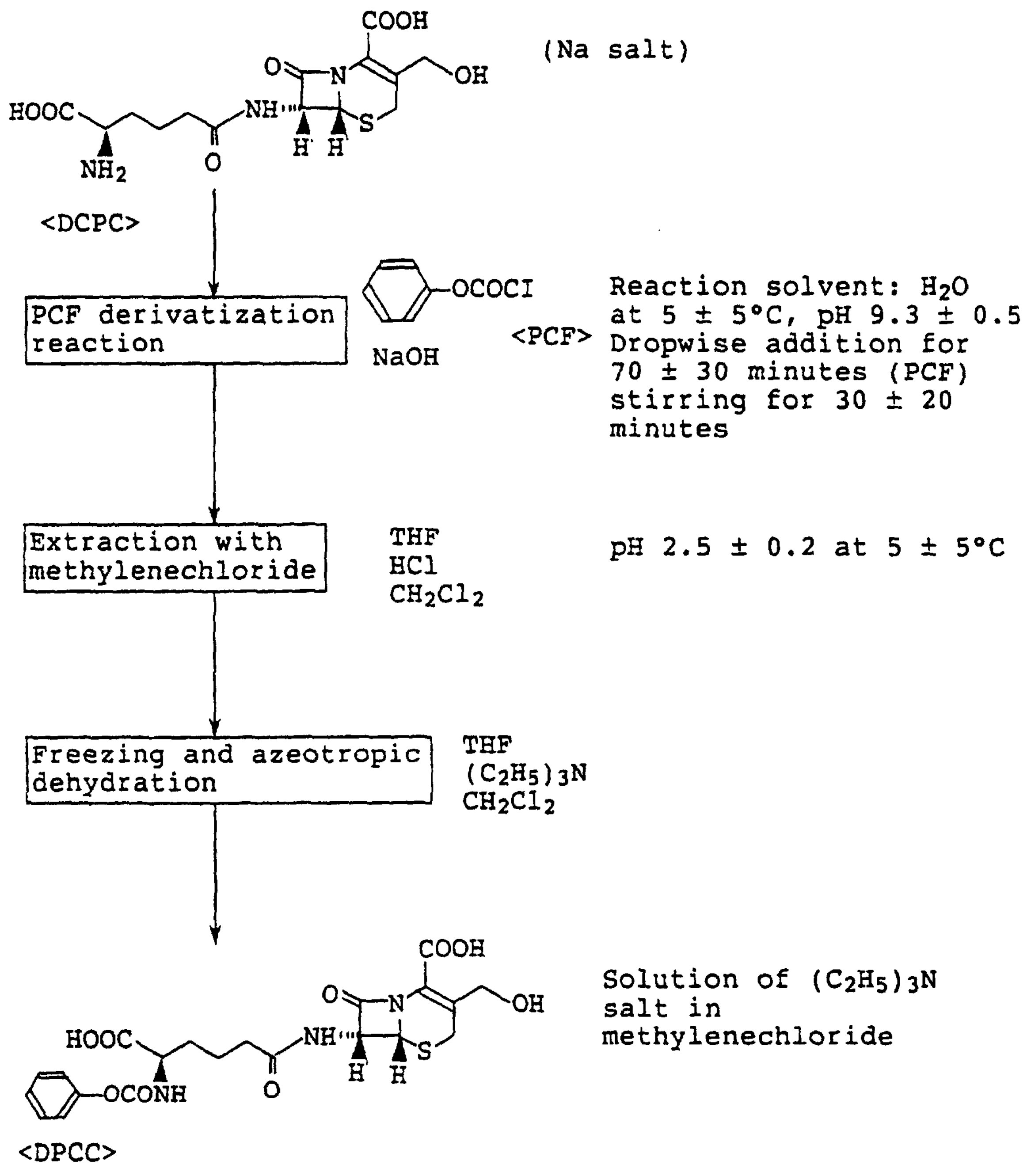

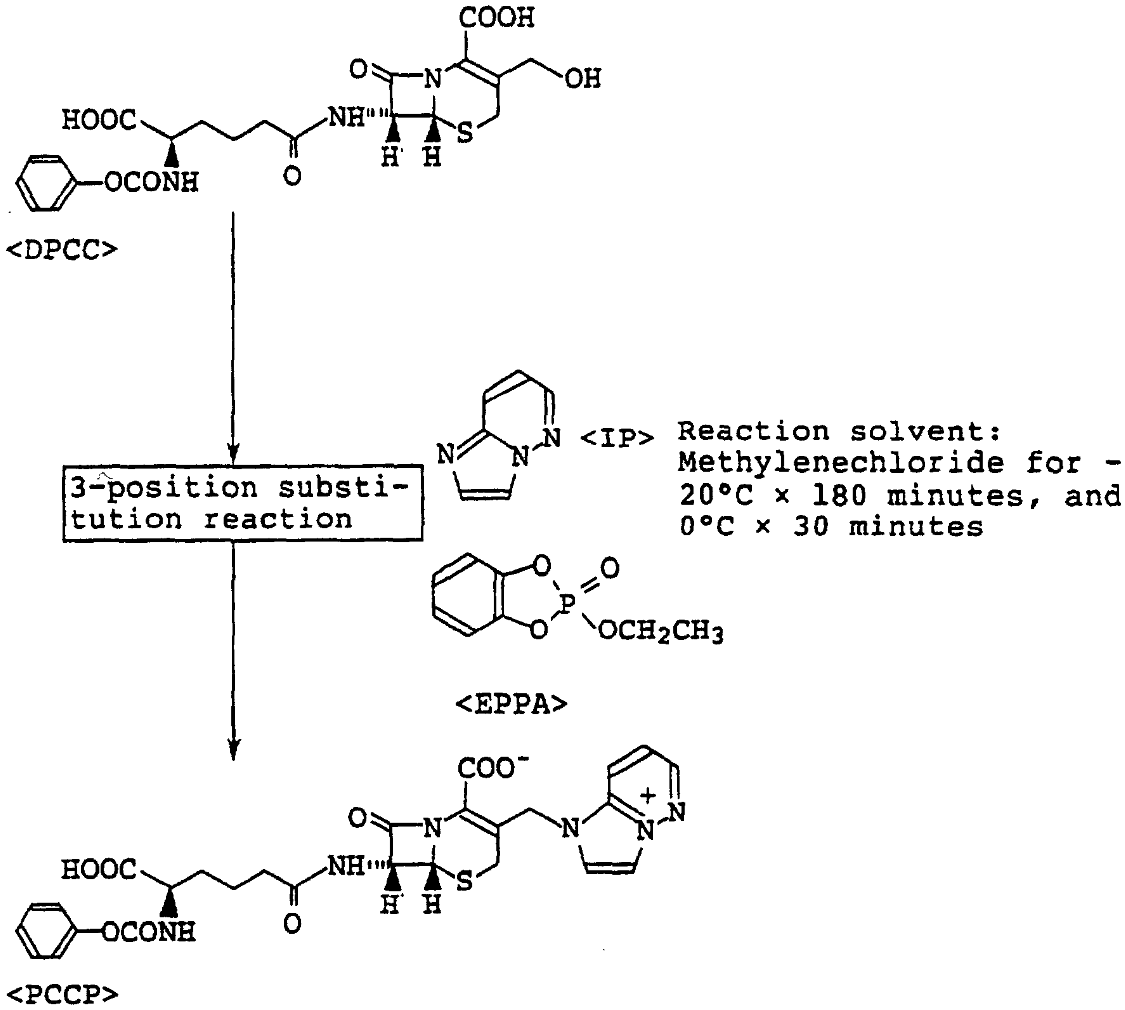
<DPCC>
3-position substitution reaction
<IP>
Reaction solvent: Methylenechloride for -20°C × 180 minutes, and 0°C × 30 minutes
<EPPA>
<PCCP>

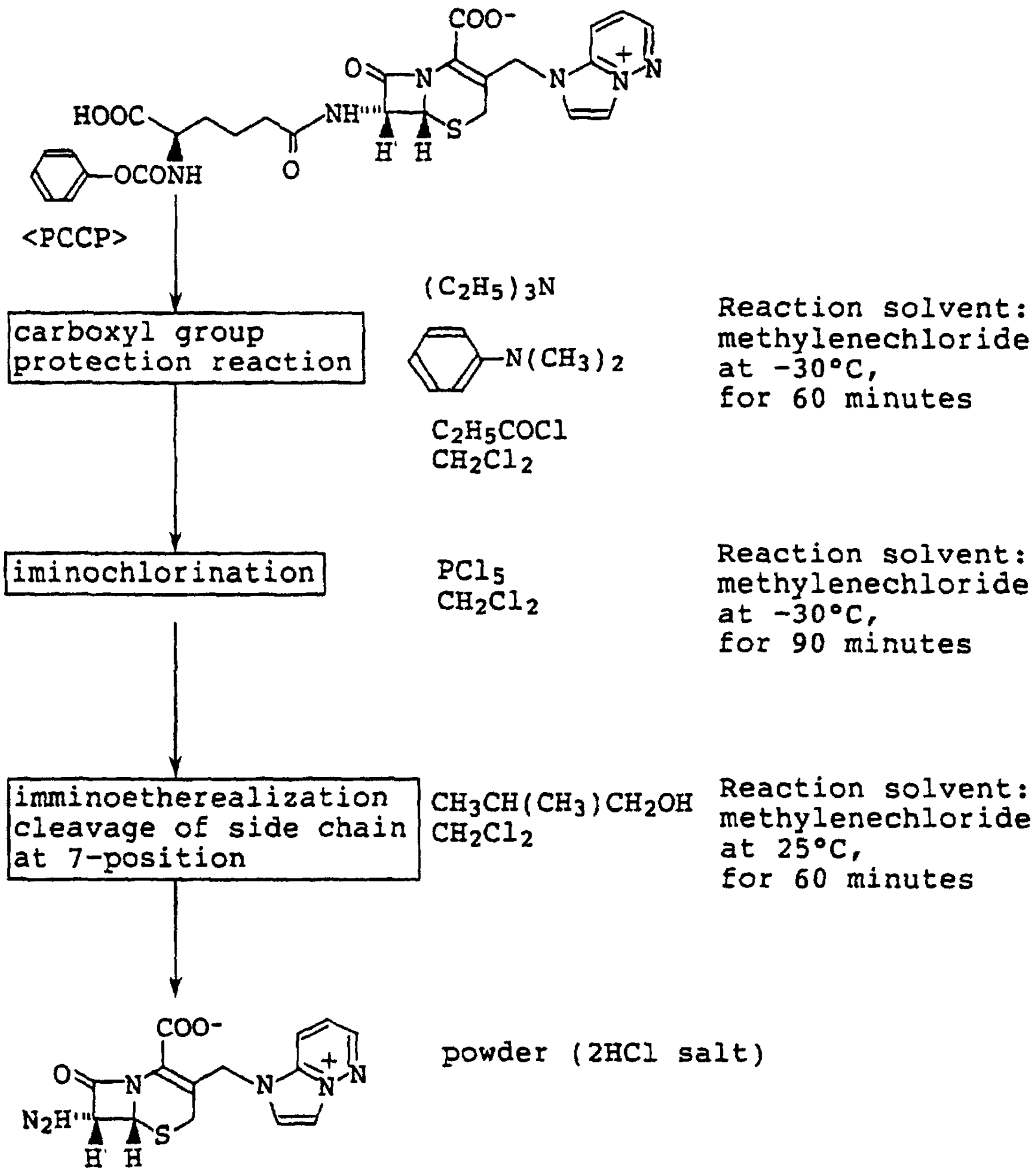


1) After 39.5 g (100 mmol) of deacetylcephalosporin C (DCPC) sodium salt was dissolved in 300 ml of water, the solution was cooled to 0 to 5°C (5 ± 5°C) and adjusted to pH 9.3 (pH 9.3 ± 0.5) with a 10% (w/w) aqueous solution of NaOH.
2) Keeping the temperature below 10°C, 17.5 g (110 mmol, 1.10 equivalents) of phenyl chlorocarbonate is added dropwise over a period of ca. 70 minutes (70 ± 30 minutes); the solution was kept between pH 9.0 and 9.6 with a 10% (w/w) aqueous solution of NaOH for about 30 minutes to minimum pH (stirring for 30 ± 20 minutes).
3) After 240 ml of tetrahydrofuran (THF) was added, the mixture was cooled to 3 to 8°C (5 ± 5°C) and adjusted to pH 2.5 (pH 2.5 ± 0.2) with concentrated hydrochloric acid, then extracted with 150 ml of dichloromethane.
4) After 76.2 ml of THF was added, the aqueous layer was adjusted to pH 2 with concentrated hydrochloric acid, then extracted with 126 m of dichloromethane.
5) The organic layers were combined; 19.3 ml of THF was added, after which the mixture was cooled below -20°C to freeze the water content, then filtered.
6) The frozen product was washed with 42.1 ml of THF precooled below -20°C.
7) The filtrate and washings were combined; 21.8 ml (170 mmol, 1.70 equivalents) of triethylamine and 102.9 ml of dichloromethane were added; the solvent is distilled off under reduced pressure to yield (6R,7R)-7-[((R)-5-phenoxycarbonylamino-5-carboxyvaleramide]-3-hydroxymethyl-8-oxo-5-thia-1-azabicyclo[4.2.0]oct-2-en-2-carboxylic acid (DPCC).

8) DPCC was azeotropically dehydrated by the addition of 35.7 g of imidazopyridine and 200 ml of dichloromethane.

9) The dry product obtained was azeotropically dehydrated by the addition of 200 ml of dichloromethane. This procedure is repeated 3 times.

10) The thus-obtained dry DPCC product was adjusted to 180 g by the addition of dichloromethane and cooled to -25 to -20°C.

11) After 36.0 g (180 mmol, 1.80 equivalents) of 2-ethoxy-1,3,2-benzodioxaphosphor-2-oxide (EPPA) was added dropwise over a period of 10 minutes, the solution obtained was washed with 4 ml of dichloromethane.

12) After reaction at -20°C for 3 hours, the temperature was raised to 0°C, followed by stirring for 30 minutes, to yield 1-[[(6R,7R)-7-[(R)-5-phenoxycarbonylamino-5-carboxyvalerylamide]-2-carboxy-8-oxo-5-thia-1-azabicyclo [4.2.0]octo-2-en-3-yl]methyl]imidazo[1,2-b]pyridazinium hydroxide (PCCP).

13) To PCCP, 300 ml of dichloromethane and 17.8 ml of triethylamine were added; after the mixture was stirred and dissolved at 5 to 15°C for 15 minutes, 87.0 ml of dimethylaniline (DMA) and 230 ml of dichloromethane were added; the mixture cooled below -45°C.

14) To the solution obtained, 61.2 ml of propionyl chloride was added dropwise at -30°C over a period of ca. 5 minutes, followed by reaction for 1 hour.

15) To the reaction mixture, a suspension of 75.2 g of phosphorus pentachloride ($PCl_5$) in 123.8 ml of dichloromethane, previously cooled to -40°C, was added, followed by reaction at -30°C for 90 minutes.

16) After 374 ml of dichloromethane was then added, the mixture was cooled to -30°C.

17) Additionally, 600 ml of isobutanol was added without delay; the temperature was raised to 25°C, followed by reaction for 1 hour.

18) The reaction mixture was filtered under a nitrogen atmosphere; the filtrate was washed with 300 ml of dichloromethane and dried under reduced pressure to yield 1-[[(6R,7R)-7-amino-2-carboxy-8-oxo-5-thia-1-azabicyclo [4.2.0]octo-2-en-3-yl]methyl]imidazo[1,2-b]pyridazinium hydroxide (7-ACP) dihydrochloride.

Industrial Applicability

According to the present invention, compound (I), which is useful as a starting material for cephalosporin antibiotics, i.e., a 7-aminocephalosporanoic acid derivative, can be produced at high yields with simple procedures.

In addition, as stated above, the entire process for production of compound (V) from starting material (II) can be achieved on a "one-pot" basis, i.e., in a single solvent without isolation of intermediate compounds.

## Claims

1. A method of producing a compound represented by the formula:

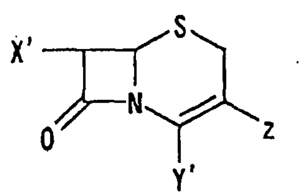

wherein X' represents an amino group that may be protected or trimethylsilylated; Y' represents a carboxyl group that may be protected or trimethylsilylated; Z represents ① hydrogen, ② a $C_{1-6}$ alkoxy group, ③ a $C_{1-6}$ alkyl group or ④ an $C_{2-6}$alkenyl group, each of ③ and ④ being unsubstituted or substituted by 1 to 4 substituents selected from the group consisting of (1) a $C_{1-10}$ alkanoyloxy group, (2) a heterocyclic group, (3) a $C_{1-6}$ alkoxy group, (4) a $C_{3-7}$ cycloalkyloxy group, (5) a $C_{6-10}$ aryloxy group, (6) a $C_{7-19}$ aralkyloxy group, (7) a heterocyclic-oxy group, (8) a mercapto group, (9) a $C_{1-6}$ alkylthio group, (10) a $C_{3-10}$ cycloalkylthio group, (11) a $C_{6-10}$ arylthio group, (12) a $C_{7-19}$ aralkylthio group, (13) a heterocyclic thio group, (14) a mono-$C_{1-6}$ alkylamino group, (15) a di-$C_{1-6}$alkylamino group, (16) a tri-$C_{1-6}$alkylammonium group, (17) a $C_{3-10}$ cycloalkylamino group, (18) a $C_{6-10}$ arylamino group, (19) a $C_{7-19}$ aralkylamino group, (20) a heterocyclic amino group, (21) a cyclic amino group, (22) an azide group, (23) a nitro group, (24) a halogen atom, (25) a cyano group, (26) a $C_{1-10}$ alkoxy-carbonyl group, (27) a $C_{6-10}$ aryloxy-carbonyl group, (28) a $C_{7-19}$ aralkyloxy-carbonyl group, (29) a $C_{6-10}$ aryl-carbonyl group, (30) a $C_{1-6}$ alkanoyl group, (31) a $C_{3-5}$ alkenoyl group, (32) a $C_{6-10}$ aryl-carbonyloxy group, (33) a $C_{2-6}$ alkanoyloxy

group, (34) a $C_{3-5}$ alkenoyloxy group, (35) a $C_{1-6}$ alkylsulfonyl group, (36) a $C_{6-10}$ arylsulfonyl group, (37) a carbamoyl group substituted by 1 or 2 substituents selected from the group consisting of a $C_{1-6}$ alkyl group, a $C_{6-10}$ aryl group, a $C_{1-6}$ alkanoyl group, a $C_{6-10}$ arylcarbonyl group and a $C_{1-6}$ alkoxy-phenyl group, (38) a cyclic aminocarbonyl group, (39) a thiocarbamoyl group substituted by 1 or 2 substituents selected from the group consisting of a $C_{1-6}$ alkyl group and a $C_{6-10}$ aryl group, (40) a carbamoyloxy group substituted by 1 or 2 substituents selected from the group consisting of a $C_{1-6}$ alkyl group, and a $C_{6-10}$ aryl group, (41) a, phthalimide group, (42) a $C_{1-6}$ an alkanoylamino group, (43) a $C_{6-10}$aryl-carbonylamino group, (44) a $C_{1-10}$ alkoxy carboxamide group, (45) a $C_{6-10}$ aryl-carboxamide group and (46) a $C_{7-19}$ aralkyloxy-carboxamide group, and the heterocyclic group of a heterocyclic group, a heterocyclic-oxy group, a heterocyclic-thio group and a heterocyclic amino group being 5- to 8-membered ring containing 1 to 4 hetero atoms selected from the group consisting of a nitrogen atom (which may be oxidated), an oxygen atom and a sulfur atom, or a condensed ring thereof, at least one of X' and Y' is trimethylsilylated, which comprises reacting a compound represented by the formula:

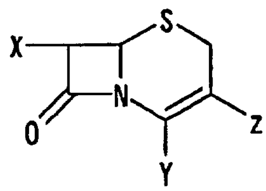

wherein X represents an amino group that may be protected; Y represents a carboxyl group that may be protected; at least one of X and Y is not protected, with hexamethyldisilazane in an inert solvent in the presence of (i) a sulfur-containing acid represented by the formula:

$$TS(O)_nH$$

wherein T is ① a hydrogen atom, ② a hydroxyl group, ③ a halogen atom ④ a $C_{1-6}$ alkyl group, ⑤ $C_{2-6}$ alkenyl group, ⑥ a $C_{6-10}$ aryl group or ⑦ a $C_{7-20}$ aralkyl group, the above ④ and ⑤ being unsubstituted or substituted by 1 or 2 halogen atoms, and the above ⑥ and ⑦ being unsubstituted or substituted by 1 or 2 substituents selected from the group consisting of a halogen atom,

and a $C_{1-4}$alkyl group, and n represents 1, 2 or 3, or (ii) an ammonium salt thereof or (iii) a Lewis acid selected from the group consisting of $BF_3 \cdot (C_2H_5)_2O$, $AlCl_3$, $ZnCl_2$, $FeCl_3$ and $TiCl_4$.

**2.** The method according to claim 1, wherein X is an amino group, Y is a carboxyl group, and Z is a $C_{1-6}$ alkyl group substituted for by a $C_{1-10}$ alkanoyloxy group.

**3.** The method according to claim 1, wherein the reaction is carried out in the presence of a sulfur-containing acid.

**4.** The method according to claim 3, wherein the sulfur-containing acid is the acid which has a sulfonic group selected from the group consisting of sulfuric acid, methanesulfonic acid, p-toluenesulfonic acid, benzenesulfonic acid and chlorosulfonic acid.

**5.** The method according to claim 3, wherein the sulfur-containing acid is sulfuric acid.

**6.** A method of producing a compound represented by the formula:

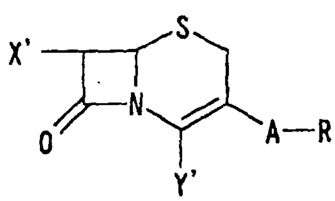

wherein X' represents an amino group that may be protected or trimethylsilylated; Y' represents a carboxyl group that may be protected or trimethylsilylated; A represents a $C_{1-6}$ alkyl group and R respresents a nucleophilic substituent, at least one of X' and Y' is trimethylsilylated, which. comprises reacting a compound represented by the formula:

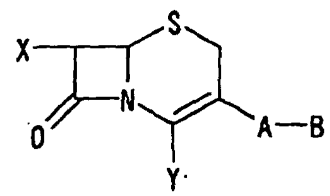

wherein X represents an amino group that may be protected, Y represents a carboxyl group that may be protected, B represents (1) a $C_{1-10}$ alkanoyloxy group, (2) a heterocyclic group, (3) a $C_{1-6}$ alkoxy group, (4) a $C_{3-7}$ cycloalkyloxy group, (5) a $C_{6-10}$ aryloxy group, (6) a $C_{7-19}$ aralkyloxy group, (7) a heterocyclic-oxy group, (8) a mercapto group, (9) a $C_{1-6}$ alkylthio group, (10) a $C_{3-10}$ cycloalkylthio group, (11) a $C_{6-10}$ arylthio group, (12) a $C_{7-19}$ aralkylthio group, (13) a heterocyclic thio group, (14) a mono-$C_{1-6}$ alkylamino group, (15) a di-$C_{1-6}$alkylamino group, (16) a tri-$C_{1-6}$alkylammonium group, (17) a $C_{3-10}$ cycloalkylamino group, (18) a $C_{6-10}$ arylamino group, (19) a $C_{7-19}$ aralkylamino group, (20) a heterocyclic amino group, (21) a cyclic amino group, (22) an azide group, (23) a nitro group, (24) a cyano group, (25) a $C_{1-10}$ alkoxy-carbonyl group, (26) a $C_{6-10}$ aryloxy-carbonyl group, (27) a $C_{7-19}$ aralkyloxy-carbonyl group, (28) a $C_{6-10}$ aryl-carbonyl group, (29) a $C_{1-6}$ alkanoyl group, (30) a $C_{3-5}$ alkenoyl group, (31) a $C_{6-10}$ aryl-carbonyloxy group, (32) a $C_{2-6}$ alkanoyloxy group, (33) a $C_{3-5}$ alkenoyloxy group, (34) a $C_{1-6}$ alkylsulfonyl group, (35) a $C_{6-10}$ arylsulfonyl group, (36) a carbamoyl group substituted by 1 or 2 substituents selected from the group consisting of a $C_{1-6}$ alkyl group, a $C_{6-10}$ aryl group, a $C_{1-6}$ alkanoyl group, a $C_{6-10}$ arylcarbonyl group and a $C_{1-6}$ alkoxy-phenyl group, (37) a cyclic aminocarbonyl group, (38) a thiocarbamoyl group substituted by 1 or 2 substituents selected from the group consisting of a $C_{1-6}$ alkyl group and a $C_{6-10}$ aryl group, (39) a carbamoyloxy group substituted by 1 or 2 substituents selected from the group consisting of a $C_{1-6}$ alkyl group, and a $C_{6-10}$ aryl group, (40) a, phthalimide group, (41) a $C_{1-6}$ an alkanoylamino group, (42) a $C_{6-10}$aryl-carbonylamino group, (43) a $C_{1-10}$ alkoxy carboxamide group, (44) a $C_{6-10}$ aryl-carboxamide group and (45) a $C_{7-19}$ aralkyloxy-carboxamide group, and the heterocyclic group of a heterocyclic group, a heterocyclic-oxy group, a heterocyclic-thio group and a heterocyclic amino group being 5- to 8-membered ring containing 1 to 4 hetero atoms selected from the group consisting of a nitrogen atom (which may be oxidated), an oxygen atom and a sulfur atom, or a condensed ring thereof, at least one of X and Y is not protected and other symbols have the same meanings given above, with hexamethyldisilazane in an inert solvent in the presence of (i) a sulfur-containing acid represented by the formula:

$$TS(O)_nH$$

wherein T is ① a hydrogen atom, ② a hydroxyl group, ③ a halogen atom ④ a $C_{1-6}$ alkyl group, ⑤ $C_{2-6}$ alkenyl group, ⑥ a $C_{6-10}$ aryl group or ⑦ a $C_{7-20}$ aralkyl group, the above ④ and ⑤ being unsubstituted or substituted by 1 or 2 halogen atoms, and the above ⑥ and ⑦ being unsubstituted or substituted by 1 or 2 substituents selected from the group consisting of a halogen atom,

and a $C_{1-6}$ alkyl group, and n represents 1, 2 or 3, or (ii) an ammonium salt thereof or (iii) a Lewis acid selected from the group consisting of $BF_3 \cdot (C_2H_5)_2O$, $AlCl_3$, $ZnCl_2$, $FeCl_3$ and $TiCl_4$ and A has the meaning give above, to give a compound of the formula:

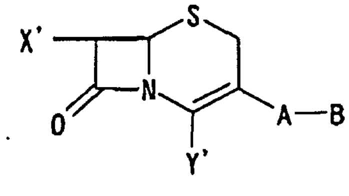

wherein each symbol has the meaning give above, subjecting the resulting compound to iodation reaction to give a compound represented by the formula:

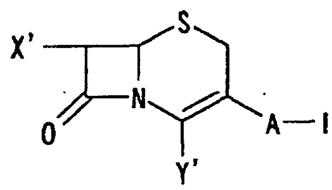

wherein each symbol has the meaning give above, and the subjecting the resulting compound to nucleophilic substitution reaction.

**7.** A method according to claim 6, wherein B is a $C_{1-10}$ alkanoyloxy group.

**8.** A method according to claim 6, wherein B is a $C_{1-6}$ alkanoyloxy group.

**Patentansprüche**

**1.** Verfahren zum Herstellen einer durch die Formel

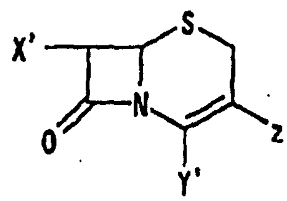

dargestellten Verbindung, worin X' eine Aminogruppe darstellt, die geschützt oder trimethylsilyliert sein kann; Y' eine Carboxygruppe darstellt, die geschützt oder trimethylsilyliert sein kann; Z ① Wasserstoff, ② eine $C_{1-6}$-Alkoxygruppe, ③ eine $C_{1-6}$-Alkylgruppe oder ④ eine $C_{2-6}$-Alkenylgruppe darstellt, wobei ③ und ④ jeweils unsubstituiert oder durch 1 bis 4 Substituenten substituiert sind, die aus der Gruppe ausgewählt sind, die aus (1) einer $C_{1-10}$-Alkanoyloxygruppe, (2) einer heterocyclischen Gruppe, (3) einer $C_{1-6}$-Alkoxygruppe, (4) einer $C_{3-7}$-Cycloalkyloxygruppe, (5) einer $C_{6-10}$-Aryloxygruppe, (6) einer $C_{7-19}$-Aralkyloxygruppe, (7) einer Heterocyclooxygruppe, (8) einer Mercaptogruppe, (9) einer $C_{1-6}$-Alkylthiogruppe, (10) einer $C_{3-10}$-Cycloalkylthiogruppe, (11) einer $C_{6-10}$-Arylthiogruppe (12) einer $C_{7-19}$-Aralkylthiogruppe, (13) einer Heterocyclothiogruppe, (14) einer Mono-$C_{1-6}$-alkylaminogruppe, (15) einer Di-$C_{1-6}$-alkylaminogruppe, (16) einer Tri-$C_{1-6}$-alkylammoniumgruppe, (17) einer $C_{3-10}$-Cycloalkylaminogruppe, (18) einer $C_{6-10}$-Arylaminogruppe, (19) einer $C_{7-19}$-Aralkylaminogruppe, (20) einer Heterocycloaminogruppe, (21) einer cyclischen Aminogruppe, (22) einer Azidgruppe, (23) einer Nitrogruppe, (24) einem Halogenatom, (25) einer Cyangruppe, (26) einer $C_{1-10}$-Alkoxycarbonylgruppe, (27) einer $C_{6-10}$-Aryloxycarbonylgruppe, (28) einer $C_{7-19}$-Aralkyloxycarbonylgruppe, (29) einer $C_{6-10}$-Arylcarbonylgruppe, (30) einer $C_{1-6}$-Alkanoylgruppe, (31) einer $C_{3-5}$-Alkenoylgruppe, (32) einer $C_{6-10}$-Arylcarbonyloxygruppe, (33) einer $C_{2-6}$-Alkanoyloxygruppe, (34) einer $C_{3-5}$-Alkenoyloxygruppe, (35) einer $C_{1-6}$-Alkylsulfonylgruppe, (36) einer $C_{6-10}$-Arylsulfonylgruppe, (37) einer Carbamoylgruppe, die durch 1 oder 2 aus der aus einer $C_{1-6}$-Alkylgruppe, einer $C_{6-10}$-Arylgruppe, einer $C_{1-6}$-Alkanoylgruppe, einer $C_{6-10}$-Arylcarbonylgruppe und einer $C_{1-6}$-Alkoxyphenylgruppe bestehenden Gruppe ausgewählte Substituenten substituiert ist, (38) einer cyclischen Aminocarbonylgruppe, (39) einer Thiocarbamoylgruppe, die durch 1 oder 2 aus der aus einer $C_{1-6}$-Alkylgruppe und einer $C_{6-10}$-Arylgruppe bestehenden Gruppe ausgewählte Substituenten substituiert ist, (40) einer Carbamoyloxygruppe, die durch 1 oder 2 aus der aus einer $C_{1-6}$-Alkylgruppe und einer $C_{6-10}$-Arylgruppe bestehenden Gruppe ausgewählte Substituenten substituiert ist, (41) einer Phthalimidgruppe, (42) einer $C_{1-6}$-Alkanoylaminogruppe, (43) einer $C_{6-10}$-Arylcarbonylaminogruppe, (44) einer $C_{1-10}$-Alkoxycarbonsäureamidgruppe, (45) einer $C_{6-10}$-Arylcarbonsäureamidgruppe und (46) einer $C_{7-19}$-Aralkyloxycarbonsäureamidgruppe besteht und die heterocyclische Gruppe einer heterocyclischen Gruppe, einer Heterocyclooxygruppe, einer Heterocyclothiogruppe und einer Heterocycloaminogruppe ein 5- bis 8gliedriger Ring, der 1 bis 4 aus der aus einem Stickstoffatom (das oxidiert sein kann), einem Sauerstoffatom und einem Schwefelatom bestehenden Gruppe ausgewählte Heteroatome enthält, oder ein kondensierter Ring davon ist, und wenigstens eines von X' und Y' trimethylsilyliert ist, das das Umsetzen einer durch die Formel

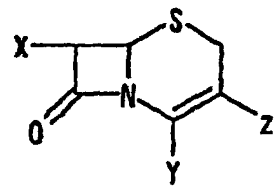

dargestellten Verbindung, worin X eine Aminogruppe darstellt, die geschützt sein kann; Y eine Carboxygruppe darstellt, die geschützt sein kann, und wenigstens eines von X und Y nicht geschützt ist, mit Hexamethyldisilazan in einem inerten Lösungsmittel in Gegenwart (i) einer durch die Formel

$$TS(O)_nH$$

dargestellten, schwefelhaltigen Säure, worin T ① ein Wasserstoffatom, ② eine Hydroxygruppe, ③ ein Halogenatom, ④ eine $C_{1-6}$-Alkylgruppe, ⑤ $C_{2-6}$-Alkenylgruppe, ⑥ eine $C_{6-10}$-Arylgruppe oder ⑦ eine $C_{7-20}$-Aralkylgruppe ist, wobei die vorstehenden ④ und ⑤ unsubstituiert oder durch 1 oder 2 Halogenatome substituiert sind und die vorstehenden ⑥ und ⑦ unsubstituiert oder durch 1 oder 2 Substituenten substituiert sind, die aus der aus einem Halogenatom und einer $C_{1-4}$-Alkylgruppe bestehenden Gruppe ausgewählt sind und n 1, 2 oder 3 darstellt, oder (ii) eines Ammoniumsalzes davon oder (iii) einer aus der aus $BF_3{\cdot}(C_2H_5)_2O$, $AlCl_3$, $ZnCl_2$, $FeCl_3$ und $TiCl_4$ bestehenden Gruppe umfaßt.

**2.** Verfahren gemäß Anspruch 1, wobei X eine Aminogruppe ist, Y eine Carboxygruppe ist und Z eine durch eine $C_{1-10}$-Alkanoyloxygruppe substituierte $C_{1-6}$-Alkylgruppe ist.

**3.** Verfahren gemäß Anspruch 1, wobei die Reaktion in Gegenwart einer schwefelhaltigen Säure durchgeführt wird.

**4.** Verfahren gemäß Anspruch 3, wobei die schwefelhaltige Säure eine Säure ist, die eine Sulfonsäuregruppe aufweist und aus der aus Schwefelsäure, Methansulfonsäure, p-Toluolsulfonsäure, Benzolsulfonsäure und Chlorsulfonsäure bestehenden Gruppe ausgewählt ist.

**5.** Verfahren gemäß Anspruch 3, wobei die schwefelhaltige Säure Schwefelsäure ist.

**6.** Verfahren zum Herstellen einer durch die Formel

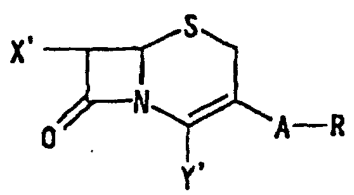

dargestellten Verbindung, worin X' eine Aminogruppe darstellt, die geschützt oder trimethylsilyliert sein kann; Y' eine Carboxygruppe darstellt, die geschützt oder trimethylsilyliert sein kann; A eine $C_{1-6}$-Alkylgruppe darstellt und R einen nukleophilen Substituenten darstellt, wobei wenigstens eines von X' oder Y' trimethylsilyliert ist, das das Umsetzen einer durch die Formel

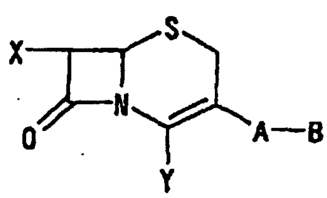

dargestellten Verbindung, worin X eine Aminogruppe darstellt, die geschützt sein kann, Y eine Carboxygruppe

darstellt, die geschützt sein kann, B (1) eine $C_{1-10}$-Alkanoyloxygruppe, (2) eine heterocyclische Gruppe, (3) eine $C_{1-6}$-Alkoxygruppe, (4) eine $C_{3-7}$-Cycloalkyloxygruppe, (5) eine $C_{6-10}$-Aryloxygruppe, (6) eine $C_{7-19}$-Aralkyloxygruppe, (7) eine Heterocyclooxygruppe, (8) eine Mercaptogruppe, (9) eine $C_{1-6}$-Alkylthiogruppe, (10) eine $C_{3-10}$-Cycloalkylthiogruppe, (11) eine $C_{6-10}$-$C_{6-10}$-Arylthiogruppe (12) eine $C_{7-19}$-Aralkylthiogruppe, (13) eine Heterocyclothiogruppe, (14) eine Mono-$C_{1-6}$-alkylaminogruppe, (15) eine Di-$C_{1-6}$alkylaminogruppe, (16) eine Tri-$C_{1-6}$-alkylammoniumgruppe, (17) eine $C_{3-10}$-Cycloalkylaminogruppe, (18) eine $C_{6-10}$-Arylaminogruppe, (19) eine $C_{7-19}$-Aralkylaminogruppe, (20) eine Heterocycloaminogruppe, (21) eine cyclische Aminogruppe, (22) eine Azidgruppe, (23) eine Nitrogruppe, (24) eine Cyangruppe, (25) eine $C_{1-10}$-Alkoxycarbonylgruppe, (26) eine $C_{6-10}$-Aryloxycarbonylgruppe, (27) eine $C_{7-19}$-Aralkyloxycarbonylgruppe, (28) eine $C_{6-10}$-Arylcarbonylgruppe, (29) eine $C_{1-6}$-Alkanoylgruppe, (30) eine $C_{3-5}$-Alkenoylgruppe, (31) eine $C_{6-10}$-Arylcarbonyloxygruppe, (32) eine $C_{2-6}$-Alkanoyloxygruppe, (33) eine $C_{3-5}$-Alkenoyloxygruppe, (34) eine $C_{1-6}$-Alkylsulfonylgruppe, (35) eine $C_{6-10}$-Arylsulfonylgruppe, (36) eine Carbamoylgruppe, die durch 1 oder 2 aus der aus einer $C_{1-6}$-Alkylgruppe, einer $C_{6-10}$-Arylgruppe, einer $C_{1-6}$-Alkanoylgruppe, einer $C_{6-10}$-Arylcarbonylgruppe und einer $C_{1-6}$-Alkoxyphenylgruppe bestehenden Gruppe ausgewählte Substituenten substituiert ist, (37) eine cyclische Aminocarbonylgruppe, (38) eine Thiocarbamoylgruppe, die durch 1 oder 2 aus der aus einer $C_{1-6}$-Alkylgruppe und einer $C_{6-10}$-Arylgruppe bestehenden Gruppe ausgewählte Substituenten substituiert ist, (39) eine Carbamoyloxygruppe, die durch 1 oder 2 aus der aus einer $C_{1-6}$-Alkylgruppe und einer $C_{6-10}$-Arylgruppe bestehenden Gruppe ausgewählte Substituenten substituiert ist, (40) eine Phthalimidgruppe, (41) eine $C_{1-6}$-Alkanoylaminogruppe, (42) eine $C_{6-10}$-Arylcarbonylaminogruppe, (43) eine $C_{1-10}$-Alkoxycarbonsäureamidgruppe, (44) eine $C_{6-10}$-Arylcarbonsäureamidgruppe und (45) eine $C_{7-19}$-Aralkyloxycarbonsäureamidgruppe dar und die heterocyclische Gruppe einer heterocyclischen Gruppe, einer Heterocyclooxygruppe, einer Heterocyclothiogruppe und einer Heterocycloaminogruppe ein 5- bis 8gliedriger Ring, der 1 bis 4 aus der aus einem Stickstoffatom (das oxidiert sein kann), einem Sauerstoffatom und einem Schwefelatom bestehenden Gruppe ausgewählte Heteroatome enthält, oder ein kondensierter Ring davon ist, und wenigstens eines von X' und Y' nicht geschützt ist und die anderen Symbole dieselben Bedeutungen wie vorstehend angegeben aufweisen, mit Hexamethyldisilazan in einem inerten Lösungsmittel in Gegenwart (i) einer durch die Formel

$$TS(O)_nH$$

dargestellten schwefelhaltigen Säure, worin T ① ein Wasserstoffatom, ② eine Hydroxygruppe, ③ ein Halogenatom, ④ eine $C_{1-6}$-Alkylgruppe, ⑤ $C_{2-6}$-Alkenylgruppe, ⑥ eine $C_{6-10}$-Arylgruppe oder ⑦ eine $C_{7-20}$-Aralkylgruppe ist, wobei die vorstehenden ④ und ⑤ unsubstituiert oder durch 1 oder 2 Halogenatome substituiert sind und die vorstehenden ⑥ und ⑦ unsubstituiert oder durch 1 oder 2 Substituenten substituiert sind, die aus der aus einem Halogenatom und einer $C_{1-6}$-Alkylgruppe ausgewählt sind, und n 1, 2 oder 3 darstellt oder (ii) eines Ammoniumsalzes davon oder (iii) einer aus der aus $BF3 \cdot (C_2H_5)_2O$, $AlCl_3$, $ZnCl_2$, $FeCl_3$ und $TiCl_4$ bestehenden Gruppe ausgewählten Lewissäure und A die vorstehend angegebene Bedeutung aufweist, unter Ergeben einer Verbindung der Formel

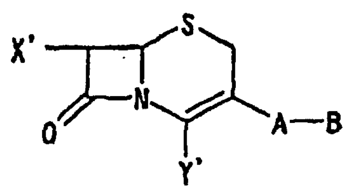

worin jedes Symbol die vorstehend angeführte Bedeutung aufweist, Unterziehen der sich daraus ergebenden Verbindung einer Iodierungsreaktion unter Ergeben einer durch die Formel

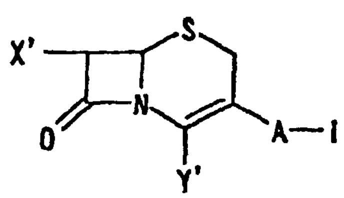

dargestellten Verbindung, worin jedes Symbol die vorstehend angegebene Bedeutung aufweist, und Unterziehen

der sich daraus ergebenden Verbindung einer nukleophilen Substitutionsreaktion umfaßt.

**7.** Verfahren gemäß Anspruch 6, wobei B eine $C_{1-10}$-Alkanoyloxygruppe ist.

**8.** Verfahren gemäß Anspruch 6, wobei B eine $C_{1-6}$-Alkanoyloxygruppe ist.

**Revendications**

**1.** Procédé de préparation de composés représentés par la formule

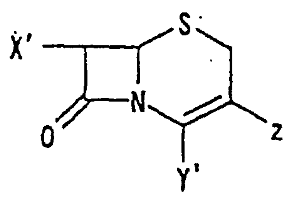

dans laquelle
X' représente un groupe amino qui peut porter un groupe protecteur ou un groupe triméthylsilyle,
Y' représente un groupe carboxyle qui peut porter un groupe protecteur ou un groupe triméthylsilyle,
et Z représente

a) un atome d'hydrogène,
b) un groupe alcoxy en $C_{1-6}$,
c) un groupe alkyle en $C_{1-6}$,
d) ou un groupe alcényle en $C_{2-6}$,

chacun des groupes (c) et (d) pouvant ne porter aucun substituant ou porter 1 à 4 substituants choisis dans l'ensemble que constituent

1) un groupe alcanoyloxy en $C_{1-10}$,
2) un groupe hétérocyclyle,
3) un groupe alcoxy en $C_{1-6}$,
4) un groupe cycloalcoxy en $C_{3-7}$,
5) un groupe aryloxy en $C_{6-10}$,
6) un groupe aralcoxy en $C_{7-19}$,
7) un groupe hétérocyclyl-oxy,
8) un groupe mercapto,
9) un groupe alkylthio en $C_{1-6}$,
10) un groupe cycloalkylthio en $C_{3-10}$,
11) un groupe arylthio en $C_{6-10}$,
12) un groupe aralkylthio en $C_{7-19}$,
13) un groupe hétérocyclyl-thio,
14) un groupe mono(alkyle en $C_{1-6}$)amino,
15) un groupe di(alkyle en $C_{1-6}$)amino,
16) un groupe tri(alkyle en $C_{1-6}$)ammonium,
17) un groupe (cycloalkyle en $C_{3-10}$)amino,
18) un groupe (aryle en $C_{6-10}$)amino,
19) un groupe (aralkyle en $C_{7-19}$)amino,
20) un groupe hétérocyclyl-amino,
21) un groupe amino cyclique,
22) un groupe azido,
23) un groupe nitro,
24) un atome d'halogène,
25) un groupe cyano,
26) un groupe (alcoxy en $C_{1-10}$)carbonyle,

27) un groupe (aryloxy en $C_{6-10}$)carbonyle,
28) un groupe (aralcoxy en $C_{7-19}$)carbonyle,
29) un groupe (aryle en $C_{6-10}$)carbonyle,
30) un groupe alcanoyle en $C_{1-6}$,
31) un groupe alcénoyle en $C_{3-5}$,
32) un groupe (aryle en $C_{6-10}$)carbonyloxy,
33) un groupe alcanoyloxy en $C_{2-6}$,
34) un groupe alcénoyloxy en $C_{3-5}$,
35) un groupe alkylsulfonyle en $C_{1-6}$,
36) un groupe arylsulfonyle en $C_{6-10}$,
37) un groupe carbamyle portant 1 ou 2 substituants choisis parmi les groupes alkyle en $C_{1-6}$, aryle en $C_{6-10}$, alcanoyle en $C_{1-6}$, (aryle en $C_{6-10}$)carbonyle et (alcoxy en $C_{1-6}$)phényle,
38) un groupe (amino cyclique)carbonyle,
39) un groupe thiocarbamyle portant 1 ou 2 substituants choisis parmi les groupes alkyle en $C_{1-6}$ et aryle en $C_{6-10}$,
40) un groupe carbamyloxy portant 1 ou 2 substituants choisis parmi les groupes alkyle en $C_{1-6}$ et aryle en $C_{6-10}$,
41) un groupe phtalimido,
42) un groupe (alcanoyle en $C_{1-6}$)aimno,
43) un groupe (aryle en $C_{6-10}$)carbonylamino,
44) un groupe (alcoxy en $C_{1-10}$)carboxamido,
45) un groupe (aryle en $C_{6-10}$)carboxamido,
46) et un groupe (aralcoxy en $C_{7-19}$)carboxamido,

les hétérocycles des groupes hétérocyclyle, hétérocyclyl-oxy, hétérocyclyl-thio et hétérocyclyl-amino étant des cycles constitués de 5 à 8 chaînons dont 1 à 4 hétéroatomes choisis parmi les atomes d'azote (éventuellement oxydé), d'oxygène et de soufre, ou des cycles condensés dérivés de tels cycles,
et au moins l'un des groupes représentés par X' et Y' portant un groupe triméthylsilyle,
lequel procédé comporte le fait de faire réagir, un composé représenté par la formule

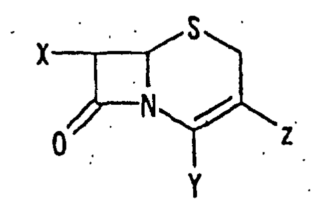

dans laquelle
X représente un groupe amino qui peut porter un groupe protecteur,
et Y représente un groupe carboxyle qui peut porter un groupe protecteur,
au moins l'un des groupes représentés par X et Y ne portant pas de groupe protecteur,
avec de l'hexaméthyldisilazane, dans un solvant inerte, et en présence

I) d'un acide soufré représenté par la formule

$$T\text{-}S(O)_nH$$

dans laquelle T représente

1a) un atome d'hydrogène,
2a) un groupe hydroxyle,
3a) un atome d'halogène,
4a) un groupe alkyle en $C_{1-6}$,
Sa) un groupe alcényle en $C_{2-6}$,
6a) un groupe aryle en $C_{6-10}$,
7a) ou un groupe aralkyle en $C_{7-20}$,

les groupes (4a) et (Sa) ci-dessus pouvant ne porter aucun substituant ou porter 1 ou 2 substituants choisis parmi les atomes d'halogène, et les groupes (6a) et (7a) ci-dessus pouvant ne porter aucun substituant ou porter 1 ou 2 substituants choisis parmi les atomes d'halogène et les groupes alkyle en $C_{1-4}$,
et n représente le nombre 1, 2 ou 3,
II) ou d'un sel d'ammonium d'un tel acide,
III) ou d'un acide de Lewis choisi parmi $BF_3{\bullet}(C_2H_5)_2O$, $AlCl_3$, $ZnCl_2$,

$FeCl_3$ et $TiCl_4$.

**2.** Procédé conforme à la revendication 1, dans lequel X représente un groupe amino, Y représente un groupe carboxyle, et Z représente un groupe alkyle en $C_{1-6}$ portant comme substituant un groupe alcanoyloxy en $C_{1-10}$.

**3.** Procédé conforme à la revendication 1, dans lequel la réaction est effectuée en présence d'un acide soufré.

**4.** Procédé conforme à la revendication 3, dans lequel l'acide soufré est un acide comportant un groupe sulfo, choisi parmi les acides sulfurique, méthanesulfonique, p-toluènesulfonique, benzènesulfonique et chlorosulfonique.

**5.** Procédé conforme à la revendication 3, dans lequel l'acide soufré est de l'acide sulfurique.

**6.** Procédé de préparation de composés représentés par la formule

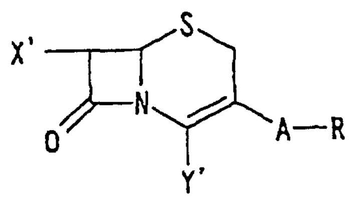

dans laquelle
X' représente un groupe amino qui peut porter un groupe protecteur ou un groupe triméthylsilyle,
Y' représente un groupe carboxyle qui peut porter un groupe protecteur ou un groupe triméthylsilyle,
A représente un groupe alkyle en $C_{1-6}$,
et R représente un substituant nucléophile,
au moins l'un des groupes représentés par X' et Y' portant un groupe triméthylsilyle,
lequel procédé comporte le fait de faire réagir un composé représenté par la formule

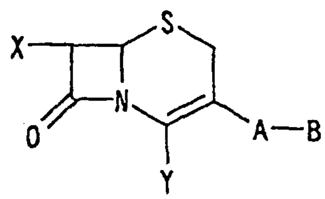

dans laquelle
X représente un groupe amino qui peut porter un groupe protecteur,
Y représente un groupe carboxyle qui peut porter un groupe protecteur,
B représente

1) un groupe alcanoyloxy en $C_{1-10}$,
2) un groupe hétérocyclyle,
3) un groupe alcoxy en $C_{1-6}$,
4) un groupe cycloalcoxy en $C_{3-7}$,
5) un groupe aryloxy en $C_{6-10}$,
6) un groupe aralcoxy en $C_{7-19}$,
7) un groupe hétérocyclyl-oxy,

8) un groupe mercapto,
9) un groupe alkylthio en $C_{1-6}$,
10) un groupe cycloalkylthio en $C_{3-10}$,
11) un groupe arylthio en $C_{6-10}$,
12) un groupe aralkylthio en $C_{7-19}$,
13) un groupe hétérocyclyl-thio,
14) un groupe mono(alkyle en $C_{1-6}$)amino,
15) un groupe di(alkyle en $C_{1-6}$)amino,
16) un groupe tri(alkyle en $C_{1-6}$)ammonium,
17) un groupe (cycloalkyle en $C_{3-10}$)amino,
18) un groupe (aryle en $C_{6-10}$)amino,
19) un groupe (aralkyle en $C_{7-19}$)amino,
20) un groupe hétérocyclyl-amino,
21) un groupe amino cyclique,
22) un groupe azido,
23) un groupe nitro,
24) un groupe cyano,
25) un groupe (alcoxy en $C_{1-10}$)carbonyle,
26) un groupe (aryloxy en $C_{6-10}$)carbonyle,
27) un groupe (aralcoxy en $C_{7-19}$)carbonyle,
28) un groupe (aryle en $C_{6-10}$)carbonyle,
29) un groupe alcanoyle en $C_{1-6}$,
30) un groupe alcénoyle en $C_{3-5}$,
31) un groupe (aryle en $C_{6-10}$)carbonyloxy,
32) un groupe alcanoyloxy en $C_{2-6}$,
33) un groupe alcénoyloxy en $C_{3-5}$,
34) un groupe alkylsulfonyle en $C_{1-6}$,
35) un groupe arylsulfonyle en $C_{6-10}$,
36) un groupe carbamyle portant 1 ou 2 substituants choisis parmi les groupes alkyle en $C_{1-6}$, aryle en $C_{6-10}$, alcanoyle en $C_{1-6}$, (aryle en $C_{6-10}$)carbonyle et (alcoxy en $C_{1-6}$)phényle,
37) un groupe (amino cyclique)carbonyle,
38) un groupe thiocarbamyle portant 1 ou 2 substituants choisis parmi les groupes alkyle en $C_{1-6}$ et aryle en $C_{6-10}$,
39) un groupe carbamyloxy portant 1 ou 2 substituants choisis parmi les groupes alkyle en $C_{1-6}$ et aryle en $C_{6-10}$,
40) un groupe phtalimido,
41) un groupe (alcanoyle en $C_{1-6}$)amino,
42) un groupe (aryle en $C_{6-10}$)carbonylamino,
43) un groupe (alcoxy en $C_{1-10}$)carboxamido,
44) un groupe (aryle en $C_{6-10}$)carboxamido,
45) et un groupe (aralcoxy en $C_{7-19}$)carboxamido,

les hétérocycles des groupes hétérocyclyle, hétérocyclyl-oxy, hétérocyclyl-thio et hétérocyclyl-amino étant des cycles constitués de 5 à 8 chaînons dont 1 à 4 hétéroatomes choisis parmi les atomes d'azote (éventuellement oxydé), d'oxygène et de soufre, ou des cycles condensés dérivés de tels cycles,
au moins l'un des groupes représentés par X et Y ne portant pas de groupe protecteur,
et les autres symboles ont les mêmes significations que celles indiquées plus haut,
avec de l'hexaméthyldisilazane, dans un solvant inerte, et en présence

I) d'un acide soufré représenté par la formule

$$T\text{-}S(O)_nH$$

dans laquelle T représente

1a) un atome d'hydrogène,
2a) un groupe hydroxyle,

3a) un atome d'halogène,
4a) un groupe alkyle en $C_{1-6}$,
5a) un groupe alcényle en $C_{2-6}$,
6a) un groupe aryle en $C_{6-10}$,
7a) ou un groupe aralkyle en $C_{7-20}$,

les groupes (4a) et (5a) ci-dessus pouvant ne porter aucun substituant ou porter 1 ou 2 substituants choisis parmi les atomes d'halogène, et les groupes (6a) et (7a) ci-dessus pouvant ne porter aucun substituant ou porter 1 ou 2 substituants choisis parmi les atomes d'halogène et les groupes alkyle en $C_{1-6}$,
et n représente le nombre 1, 2 ou 3,
II) ou d'un sel d'ammonium d'un tel acide,
III) ou d'un acide de Lewis choisi parmi $BF_3 \cdot (C_2H_5)_2O$, $AlCl_3$, $ZnCl_2$,

$FeCl_3$ et $TiCl_4$,

A ayant la signification indiquée plus haut,
pour obtenir un composé de formule

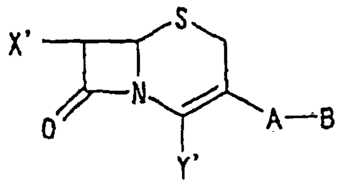

dans laquelle chaque symbole a la signification indiquée plus haut, le fait de soumettre le composé ainsi obtenu à une réaction de iodation qui donne un composé de formule

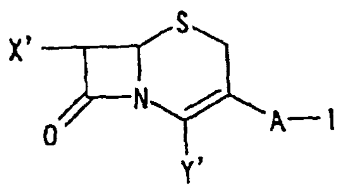

dans laquelle chaque symbole a la signification indiquée plus haut,
et le fait de soumettre le composé ainsi obtenu à une réaction de substitution nucléophile.

**7.** Procédé conforme à la revendication 6, dans lequel B représente un groupe alcanoyloxy en $C_{1-10}$.

**8.** Procédé conforme à la revendication 6, dans lequel B représente un groupe alcanoyloxy en $C_{1-6}$.